# EUROPEAN PATENT APPLICATION

(11) **EP 4 848 375 A1**
(43) Date of publication of application: **02.12.2026**
(21) Application number: 26178721.2
(22) Date of filing: 13.05.2026
(51) Int. Cl.: H01M 4/58, H01M 4/36, H01M 4/136, H01M 4/525

(54) **COMPOSITE POSITIVE ELECTRODE ACTIVE MATERIAL, METHOD OF PREPARING COMPOSITE POSITIVE ELECTRODE ACTIVE MATERIAL, AND RECHARGEABLE LITHIUM BATTERY**

(30) Priority: 14.05.2025 KR 20250062698; 11.05.2026 KR 20260084888
(71) Applicant: SAMSUNG SDI CO., LTD., Yongin-si, Gyeonggi-do 17084 (KR)
(72) Inventor: KIM, Young-Ki, 17084 Yongin-si (KR); KIM, Sangmi, 17084 Yongin-si (KR); DOO, Sungwook, 17084 Yongin-si (KR); KANG, Minchul, 17084 Yongin-si (KR); KANG, Gwiwoon, 17084 Yongin-si (KR); LEE, Soonrewl, 17084 Yongin-si (KR)
(74) Representative: Maiwald GmbH

(57) **Abstract**

A composite positive electrode active material according to some embodiments of the present disclosure may include a core particle in a form of secondary particles and a coating portion being disposed on a surface of the core particle and including boron, wherein the core particle comprises a first positive electrode active material including a lithium iron phosphate-based compound and being in a form of a plurality of primary particles, and a second positive electrode active material including a lithium nickel-based composite oxide and being in a form of a plurality of primary particles.

## Description

### BACKGROUND

### 1. Field

The present disclosure relates to composite positive electrode active materials, methods of preparing the same, and rechargeable lithium batteries.

### 2. Description of the Related Art

A portable information device (such as a cell phone, a laptop, or smart phone) or an electric vehicle has used a rechargeable lithium battery having high energy density as a driving power source. Recently, research has been actively conducted to use a rechargeable lithium battery with high energy density as a driving power source for hybrid or electric vehicles or power storage source.

In addition, there is an increasing demand for new positive electrode active materials that are high-performance, safe, and reliable for the enlargement and mass production of rechargeable lithium batteries. A lithium iron phosphate-based positive electrode active material is attracting attention due to being structurally stable, having high heat resistance, and being abundant in a raw material, making them cost-effective.

However, the lithium iron phosphate-based positive electrode active material has a phenomenon in which cycle-life characteristics deteriorate at high voltage, and, thus, there is a limit to the voltage of use of the rechargeable lithium battery. The lithium iron phosphate-based positive electrode active material also has a disadvantage of low capacity and energy density. A positive electrode active material that simply mixes a lithium nickel-based composite oxide with a lithium iron phosphate-based positive electrode active material has been used to improve capacity and energy density, but there is a problem of deterioration in high-temperature storage characteristics.

### SUMMARY

The present disclosure provides a composite positive electrode active material, a method of preparing the composite positive electrode active material, and a rechargeable lithium battery, which secures price competitiveness by including core particle and which has a high pellet density, high initial charge/discharge capacity and efficiency, improved average voltage, high discharge capacity at low temperatures, excellent cycle-life characteristics and high-rate cycle-life characteristics, improved high-temperature storage characteristics, improved capacity per volume and energy density, and low resistance. The composite positive electrode active material further includes a coating portion to effectively suppress collapse of the assembly structure due to repeated charge/discharge cycles, thereby improving structural stability of the rechargeable lithium battery.

A composite positive electrode active material according to some embodiments of the present disclosure may include a core particle in a form of secondary particles and a coating portion disposed on a surface of the core particle and including boron, wherein the core particle includes a first positive electrode active material including a lithium iron phosphate-based compound and being in a form of a plurality of primary particles, and a second positive electrode active material including a lithium nickel-based composite oxide and being in a form of a plurality of primary particles.

In some embodiments, the lithium iron phosphate-based compound may include a compound represented by Chemical Formula 1, a compound represented by Chemical Formula 2, or a combination thereof. Chemical Formula 1 may be as follows:

[Chemical Formula 1] Liₐ₁Fe₍₁₋ₓ₁₎M¹ₓ₁PO₄,

where 0.9≤a1≤1.5 and 0≤x1≤0.4. M¹ may be Al, Ca, Ce, Cr, Cu, La, Mg, Mn, Mo, Nb, Ni, Sn, Sr, Ti, V, W, Y, Zn, Zr, or a combination thereof. Chemical Formula 2 may be as follows:

[Chemical Formula 2] Liₐ₂Mnₓ₂Fe_{(1-x2-y2)}M²_{y2}PO₄,

where 0.9≤a2≤1.5, 0.1≤x2≤0.9, 0≤y2<0.9, and x2+y2<1. M² may be Al, Ca, Ce, Cr, Cu, La, Mg, Mo, Nb, Ni, Sn, Sr, Ti, V, W, Y, Zn, Zr, or a combination thereof.

In some embodiments, the lithium iron phosphate-based compound may include Al, Mg, Ti, V, or a combination thereof in an amount from about 0.1 mol% to about 0.5 mol% based on a total metal of the lithium iron phosphate-based compound, excluding lithium.

In some embodiments, the first positive electrode active material may further include a carbon coating portion (hereinafter, also referred to as a carbon coating layer) on surfaces of the primary particles.

In some embodiments, the lithium nickel-based composite oxide may be represented by:

Liₐ₃Niₓ₃M³_{y3}M⁴_{z3}O_{2-b3}X_{b3},

where 0.9≤a3≤1.2, 0.3≤x3≤1, 0≤y3≤0.7, 0≤z3≤0.7, 0.9≤x3+y3+z3≤1.1, and 0≤b3≤0.1. M³ and M⁴ may be each independently Al, B, Ba, Ca, Ce, Co, Cr, Cu, Fe, Mg, Mn, Mo, Nb, Si, Sn, Sr, Ti, V, W, Y, Zn, Zr, or a combination thereof. M³ and M⁴ may be different elements. X may be F, P, S, or a combination thereof.

In some embodiments, an amount of nickel in the lithium nickel-based composite oxide may be from about 50 mol% to about 100 mol%, based on 100 mol% of a total metal in the lithium nickel-based composite oxide, excluding lithium.

In some embodiments, an average particle diameter of the primary particles of the first positive electrode active material may be greater than or equal to about 0.1 µm and less than about 2 µm. An average particle diameter of the primary particles of the second positive electrode active material may be from about 2 µm to about 8 µm.

In some embodiments, an average particle diameter of the secondary particles may be from about 3 µm to about 20 µm.

In some embodiments, the core particle may include the first positive electrode active material in an amount from about 50 wt% to about 99 wt% based on 100 wt% of the core particle. The core particle may include the second positive electrode active material in an amount from about 1 wt% to about 50 wt% based on 100 wt% of the core particle.

In some embodiments, a number of primary particles of the second positive electrode active material in core particle may be 10 or less.

In some embodiments, the coating portion may include a boron-containing compound. The boron-containing compound may include boron oxide, lithium borate, or a combination thereof.

In some embodiments, the composite positive electrode active material may include boron in an amount of from about 0.01 mol% to about 3 mol%, based on 100 mol% of elements in the composite positive electrode active material excluding lithium and oxygen.

In some embodiments, the composite positive electrode active material may further include a grain boundary coating portion disposed on the surface of the primary particles and disposed inside the secondary particles, the grain boundary coating portion including boron.

In some embodiments, a weight ratio of boron in the coating portion to boron in the grain boundary coating portion ranges from about 70:30 to about 98:2.

A method of preparing a composite positive electrode active material according to some embodiments of the present disclosure may include preparing a first positive electrode active material including a lithium iron phosphate-based compound and being in a form of primary particles; mixing and wet milling the first positive electrode active material, a second positive electrode active material including a lithium nickel-based composite oxide and in a form of primary particles, and a boron raw material to prepare a first slurry; and adding the first slurry to a spray dryer and spray drying the first slurry to prepare a first dried product.

In some embodiments, the preparing of the first positive electrode active material may include wet milling an iron phosphate-based precursor, a lithium raw material, and a carbon raw material mixed in a second solvent to prepare a second slurry; adding the second slurry to a spray dryer and spray-drying the second slurry to prepare a second dried product; firing the second dried product to prepare a second fired product; and pulverizing the second fired product.

In some embodiments, an amount of boron in the boron raw material may be about 0.01 parts by mole to about 3 parts by mole, based on 100 parts by mole of elements in a total of the first positive electrode active material and the second positive electrode active material, excluding lithium and oxygen.

In some embodiments, the spray drying of the first slurry and the spray drying of the second slurry may each independently be performed at temperatures ranging from about 150°C to about 400°C.

In some embodiments, the method further includes, after preparing the first dried product, firing the first dried product to prepare a first fired product. The firing may be performed in vacuum or in an inert gas and at a temperature ranging from about 300°C to about 1000°C.

A rechargeable lithium battery according to some embodiments of the present disclosure may include a positive electrode, a negative electrode, and an electrolyte. The positive electrode may include a positive electrode current collector and a positive electrode active material layer disposed on the positive electrode current collector and including the composite positive electrode active material as described above.

The composite positive electrode active material according to some embodiments may secure price competitiveness by including a core particle, while having high pellet density, high initial charge/discharge capacity and efficiency, improved average voltage, high discharge capacity at low temperature, excellent cycle-life characteristics and high-rate cycle-life characteristics, improved high-temperature storage characteristics, improved capacity per volume and energy density, and low resistance. In addition, the positive electrode active material further includes a boron-containing coating portion, thereby effectively suppressing the collapse of the assembly structure due to repeated charging and discharging, thereby improving structural stability of the rechargeable lithium battery.

### BRIEF DESCRIPTION OF THE DRAWINGS

FIG. 1 is a schematic perspective view showing a portion of a cylindrical rechargeable lithium battery according to some embodiments of the present disclosure.
FIG. 2 is a cross-sectional view schematically showing a prismatic rechargeable lithium battery according to some embodiments of the present disclosure.
FIGS. 3 and 4 are each a schematic exploded perspective view of a pouch-type rechargeable lithium battery.

### DETAILED DESCRIPTION

Hereinafter, specific embodiments will be described in detail so that those of ordinary skill in the art can easily implement them. However, this disclosure may be embodied in many different forms and is not construed as limited to the embodiments set forth herein.

The terminology used herein is used to describe embodiments, and is not intended to limit the present invention. The singular expression includes the plural expression unless the context clearly dictates otherwise.

The term "combination thereof" refers to a mixture, a laminate, a composite, a copolymer, an alloy, a blend, or a reaction product of the constituents.

Terms such as "comprises," "includes," or "have" are intended to designate the presence of an embodied feature, number, step, element, or a combination thereof, but those terms do not preclude the possibility of the presence or addition of one or more other features, number, step, element, or a combination thereof.

In the drawings, the thickness of layers, films, panels, or regions are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a geometry formed on the whole surface when viewed from a plan view, but also a geometry formed on a partial surface.

The average particle diameter may be measured, for example, by a particle size analyzer or by a transmission electron microscope image or a scanning electron microscope image. Alternatively, it is possible to obtain an average particle diameter value by measuring using a dynamic light scattering method, performing data analysis, counting the number of particles for each particle size range, and calculating from this. When a definition is not otherwise provided, the average particle diameter D₅₀ may mean a diameter of particles having a cumulative volume of 50 vol% in the particle size distribution, wherein the particles are assumed to be spherical. When a definition is not otherwise provided, the average particle diameter refers to a value obtained by measuring the sizes of 20 randomly selected particles from a scanning electron microscope (SEM) image and calculating an arithmetic mean of the sizes of 20 randomly selected particles, wherein the size of each particle is defined as a diameter in the case of a spherical particle, and as a square root of a product of a major axis length and a minor axis length in the case of a non-spherical particle.

The word "or" is not to be construed as an exclusive meaning, for example, "A or B" is construed to include A, B, or A+B.

"Metal" is interpreted as a concept including ordinary metals, transition metals and metalloids (semi-metals). As used herein, the term "metalloid" refers to an element having properties intermediate between those of metals and non-metals. Examples of the metalloid include, but are not limited to, boron (B), silicon (Si), germanium (Ge), arsenic (As), antimony (Sb), and tellurium (Te).

As used herein, the term "vacuum" refers to a pressure in the range of 0.1 mbar to 10 mbar, as measured in the treatment chamber using a vacuum gauge.

As used herein, the term "primary particle" refers to a minimum unit particle that is recognized as a single particle agglomerate when a positive electrode active material is observed using a scanning electron microscope (SEM), in which a grain boundary is not clearly distinguishable or is not substantially observed. A primary particle is a basic unit constituting a secondary particle formed by aggregation of tens to hundreds of particles, and may exist alone or in a state in which a small number (for example, 20 or less) of primary particles are in contact with each other.

As used herein, the term "secondary particle" refers to an agglomerate of primary particles of a given material, and may also be referred to as an assembly in the present disclosure. A secondary particle has a structure in which the primary particles are combined into a single particle form through interparticle contact and bonding, rather than being simply physically mixed. A secondary particle may be recognized as a single particle form in which a plurality of primary particles are aggregated when observed using a scanning electron microscope (SEM). Such a secondary particle is distinguished from a simple mixture in which respective particles are independently dispersed. A secondary particle may be formed by a spray-drying process, or the like.

### Composite Positive Electrode Active Material

A composite positive electrode active material according to some embodiments includes a first positive electrode active material including a lithium iron phosphate-based compound and being in a form of primary particles, and a second positive electrode active material including a lithium nickel-based composite oxide and being in a form of primary particles. The composite positive electrode active material includes a core particle in a form of secondary particles including a plurality of the primary particles of the first positive electrode active material and a plurality of the primary particles of the second positive electrode active material and a coating portion disposed on the surface of the core particle and including boron.

The lithium iron phosphate-based compound that has excellent structural stability, high heat resistance, and price competitiveness is attracting attention. However, although the lithium iron phosphate-based compound provides excellent cycle-life characteristics, cycle-life characteristics of the lithium iron phosphate-based compound deteriorate when used at high voltages, so usable voltage of the lithium iron phosphate-based compound is limited.

There have been attempts to use a simple mixture of a lithium iron phosphate-based compound and a lithium nickel-based composite oxide to achieve high capacity, and, although this allows for high energy density, high voltage use, and high capacity, high-temperature storage characteristics of a rechargeable lithium battery may be deteriorated.

A composite positive electrode active material according to some embodiments includes a lithium iron phosphate-based compound to secure price competitiveness, and also includes a lithium nickel-based composite oxide to enable high energy density, high voltage operation, and high capacity, but has a form of secondary particles including primary particles of the lithium iron phosphate-based compound and primary particles of the lithium nickel-based composite oxide, wherein the particles are in a single secondary particle form, more specifically an aggregated structure, is capable of improving low-temperature discharge capacity, low-rate and high-rate cycle-life characteristics, and high-temperature storage characteristics compared to a positive electrode active material in a simple mixed form. In addition, the composite positive electrode active material according to some embodiments may further include a coating portion including boron on a surface of the secondary particle, thereby improving structural stability, and, thus, further improving battery performance of the rechargeable lithium battery.

### Core Particle

The core particle includes a first positive electrode active material in the form of primary particles and a second positive electrode active material in the form of primary particles, and the core particle is in a form of secondary particles including a plurality of primary particles of the first positive electrode active material and a plurality of primary particles of the second positive electrode active material.

### First Positive Electrode Active Material

The first positive electrode active material includes a lithium iron phosphate-based compound. The composite positive electrode active material may secure price competitiveness while also having excellent structural stability and thermal stability by including a lithium iron phosphate-based compound as the first positive electrode active material.

The lithium iron phosphate-based compound may include, for example, a compound represented by Chemical Formula 1, a compound represented by Chemical Formula 2, or a combination thereof. Chemical Formula 1 is as follows:

[Chemical Formula 1] Liₐ₁Fe₍₁₋ₓ₁₎M¹ₓ₁PO₄.

In Chemical Formula 1, 0.9≤a1≤1.5, 0≤x1≤0.4, and M¹ is Al, Ca, Ce, Cr, Cu, La, Mg, Mn, Mo, Nb, Ni, Sn, Sr, Ti, V, W, Y, Zn, Zr, or a combination thereof. Further, 0.90≤a1≤1.5, for example, 0.90≤a1≤1.2, or 0.95≤a1≤1.1. Additionally, 0≤x1≤0.4, 0≤x1≤0.3, 0≤x1≤0.2, 0≤x1≤0.1 or 0.001≤x1≤0.05.

Chemical Formula 2 is as follows:

[Chemical Formula 2] Liₐ₂Mnₓ₂Fe_{(1-x2-y2)}M²_{y2}PO₄.

In Chemical Formula 2, 0.9≤a2≤1.5, 0.1≤x2≤0.9, 0≤y2<0.9, x2+y2<1, and M² is Al, Ca, Ce, Cr, Cu, La, Mg, Mo, Nb, Ni, Sn, Sr, Ti, V, W, Y, Zn, Zr, or a combination thereof. Further, 0.90≤a2≤1.5, for example, 0.90≤a2≤1.2, or 0.95≤a2≤1.1. In addition, 0.1≤x2≤0.9, 0.3≤x2≤0.9, or 0.4≤x2≤0.8 and 0≤y2≤0.4, 0≤y2≤0.3, 0≤y2≤0.2, 0≤y2≤0.1, or 0≤y2≤0.05.

The lithium iron phosphate-based compound may include LiFePO₄, LiMn_{0.7}Fe_{0.3}PO₄, LiMn_{0.6}Fe_{0.4}PO₄, LiMn_{0.5}Fe_{0.5}PO₄, LiMn_{0.4}Fe_{0.6}PO₄, LiMn_{0.3}Fe_{0.7}PO₄, or a combination thereof, but the lithium iron phosphate-based compound is not limited thereto.

The lithium iron phosphate-based compound may include Al, Mg, Ti, V, or a combination thereof as a type of doping element, and the Al, Mg, Ti, V, or the combination thereof may be included in an amount from about 0.1 mol% to about 0.5 mol%, from about 0.2 mol% to about 0.5 mol%, from about 0.3 mol% to about 0.5 mol%, or about 0.4 mol%, based on a total metal, excluding lithium, in which case the rate characteristics and cycle-life characteristics may be improved for the rechargeable lithium battery.

The lithium iron phosphate-based compound may include Ti, Al, or a combination thereof as a doping element, and an amount of Ti may be from about 0.1 mol% to about 0.5 mol%, from about 0.2 mol% to about 0.5 mol%, from about 0.3 mol% to about 0.5 mol%, or about 0.4 mol%, based on a total metal, excluding lithium, and an amount of Al may be from about 0.1 mol% to about 0.5 mol% based on a total metal, excluding lithium. Rate characteristics and cycle-life characteristics may be improved for the rechargeable lithium battery.

M¹ of Chemical Formula 1 and M² of Chemical Formula 2 may include Al, Mg, Ti, V, or a combination thereof, in which case cycle-life characteristics of the lithium iron phosphate-based positive electrode active material may be improved. In Chemical Formulas 1 and 2, Al, Mg, Ti, V, or a combination thereof may be included in an amount from about 0.1 mol% to about 0.5 mol%, from about 0.2 mol% to about 0.5 mol%, from about 0.3 mol% to about 0.5 mol%, or about 0.4 mol%, based on a total metal, excluding lithium, and cycle-life characteristics of the lithium iron phosphate-based positive electrode active material may be improved. In Chemical Formula 1, 0.001≤x1≤0.005, 0.002≤x1≤0.005, 0.003≤x1≤0.005, or x1=0.004, and, in Chemical Formula 2, 0.001≤x2≤0.005, 0.002≤x2≤0.005, 0.003≤x2≤0.005, or x2=0.004, in which case cycle-life characteristics of the lithium iron phosphate-based positive electrode active material may be improved.

The first positive electrode active material is in the form of primary particles, and an average particle diameter of the primary particles of the first positive electrode active material may be less than about 2 µm. The average particle diameter of the primary particles of the first positive electrode active material may be, for example, greater than or equal to about 0.1 µm less than about 2 µm, from about 0.1 µm to about 1.8 µm, from about 0.1 µm to about 1.6 µm, from about 0.1 µm to about 1.4 µm, from about 0.1 µm to about 1.2 µm, from about 0.1 µm to about 1 µm, from about 0.1 µm to about 0.8 µm, from about 0.2 µm to about 0.8 µm, from about 0.3 µm to about 0.7 µm, or about 0.5 µm. The average particle diameter of the primary particles of the first positive electrode active material may be obtained by measuring the sizes of 20 primary particles of the first positive electrode active material in an electron microscope image of the surface or cross-section of the positive electrode active material in a form of secondary particles, and calculating an arithmetic mean of the size of each particle, wherein the size of each particle is defined as a diameter in the case of a spherical particle, and as a square root of a product of a major axis length and a minor axis length in the case of a non-spherical particle. The average particle diameter of the primary particles of the first positive electrode active material may be less than the average particle diameter of the primary particles of the second positive electrode active material described below.

According to some embodiments, the first positive electrode active material may have primary particles that are small and uniform in size. Accordingly, the composite positive electrode active material including the core particle has high charge/discharge capacity and excellent cycle-life characteristics.

In addition, as measured by an SEM image of a cross-section of the composite positive electrode active material, an arithmetic mean size of the primary particles of the first positive electrode active material constituting the core particle may be less than or equal to about 200 nm, from about 50 nm to about 200 nm, or from about 100 nm to about 200 nm, and the standard deviation of the arithmetic mean size may be less than or equal to about 100 nm, less than or equal to about 50 nm, less than or equal to about 30 nm, or less than or equal to about 25 nm and may be greater than or equal to about 5 nm, greater than or equal to about 10 nm, greater than or equal to about 12 nm, or greater than or equal to about 15nm. The arithmetic mean size and its standard deviation of the primary particles of the first positive electrode active material may be obtained by measuring the size of 20 random primary particles of the first positive electrode active material in an SEM image or TEM image of the surface or cross-section of the composite positive electrode active material, and calculating the arithmetic mean value and the standard deviation value of the arithmetic mean value, wherein the size of each particle is defined as a diameter in the case of a spherical particle, and as a square root of a product of a major axis length and a minor axis length in the case of a non-spherical particle.

The first positive electrode active material may further include a carbon coating layer on the surface of the primary particles. The carbon coating layer may improve electrical conductivity of the first positive electrode active material and decrease the resistance of the positive electrode.

The carbon coating layer may include amorphous carbon and may be formed using, for example, glucose, sucrose, lactose, starch, oligosaccharide, polyoligosaccharide, fructose, cellulose, poly(furfuryl alcohol), polyethylene glycol, a block copolymer of ethylene and ethylene oxide, a vinyl-based resin, a cellulose-based resin, a phenolic resin, a pitch-based resin, a tar-based resin, or a combination thereof.

Specifically, the carbon coating layer may be formed by disposing the carbon raw material on the surface of the first positive electrode active material particles and then performing a firing process. The carbon raw material and primary particles may be mixed and fired to form a carbon coating layer on the surface of the primary particles, or the carbon raw material and secondary particles may be mixed and fired to form a carbon coating layer on the surface of the secondary particles and then pulverized to prepare primary particles having a carbon coating layer.

The carbon coating layer may be included in an amount from about 0.1 wt% to about 3.9 wt%, for example, from about 0.5 wt% to about 3.9 wt%, from about 1 wt% to about 3.9 wt%, from about 1.5 wt% to about 3.9 wt%, or from about 1.7 wt% to about 3.9 wt% based on 100 wt% of the first positive electrode active material. The amount of the carbon coating layer may be greater than or equal to about 1.5 wt%, greater than about 1.5 wt%, greater than or equal to about 1.6 wt%, greater than or equal to about 1.7 wt%, or greater than or equal to about 1.8 wt% based on 100 wt% of the first positive electrode active material. The amount of the carbon coating layer may be analyzed by completely combusting the first positive electrode active material at a high temperature from about 1200°C to about 1400°C and in an oxygen atmosphere to convert carbon and sulfur in the first positive electrode active material into CO₂ (or CO) and SO₂, respectively. An amount of the carbon coating layer may be the amount of carbon based on 100 wt% of the first positive electrode active material.

The first positive electrode active material may be manufactured by a known method or may be a commercially available product. For example, the first positive electrode active material may be obtained by pulverizing secondary particles formed by aggregation of a plurality of primary particles and includes a lithium iron phosphate-based compound.

### Second Positive Electrode Active Material

The second positive electrode active material includes a lithium nickel-based composite oxide.

The lithium nickel-based composite oxide may be represented by Chemical Formula 3, which is as follows:

[Chemical Formula 3] Liₐ₃Niₓ₃M³_{y3}M⁴_{z3}O_{2-b3}X_{b3}.

In Chemical Formula 3, 0.9≤a3≤1.2, 0.3≤x3≤1, 0≤y3≤0.7, 0≤z3≤0.7, 0.9≤x3+y3+z3≤1.1, and 0≤b3≤0.1, M³ and M⁴ are each independently Al, B, Ba, Ca, Ce, Co, Cr, Cu, Fe, Mg, Mn, Mo, Nb, Si, Sn, Sr, Ti, V, W, Y, Zn, Zr, or a combination thereof, M³ and M⁴ are different elements, and X is F, P, S, or a combination thereof.

In Chemical Formula 3, 0.5≤x3≤0.8, 0.05≤y3≤0.35, and 0.15≤z3≤0.45; 0.5≤x3≤0.65, 0.05≤y3≤0.2, and 0.3≤z3≤0.45; or 0.55≤x3≤0.65, 0.05≤y3≤0.15, and 0.3≤z3≤0.4.

The lithium nickel-based composite oxide may be represented by Chemical Formula 4 or Chemical Formula 5. Chemical Formula 4 is as follows:

[Chemical Formula 4] Liₐ₄Niₓ₄Co_{y4}M⁵_{z4}O_{2-b4}X_{b4}.

In Chemical Formula 4, 0.9≤a4≤1.2, 0.3≤x4<1, 0<y4≤0.7, 0≤z4≤0.7, 0.9≤x4+y4+z4≤1.1, and 0≤b4≤0.1, M⁵ is Al, B, Ba, Ca, Ce, Cr, Cu, Fe, Mg, Mn, Mo, Nb, Si, Sn, Sr, Ti, V, W, Y, Zn, Zr, or a combination thereof, and X is F, P, S or a combination thereof.

In Chemical Formula 4, 0.5≤x4≤0.8, 0.05≤y4≤0.35, and 0.15≤z4≤0.45; 0.5≤x4≤0.65, 0.05≤y4≤0.2, and 0.3≤z4≤0.45; or 0.55≤x4≤0.65, 0.05≤y4≤0.15, and 0.3≤z4≤0.4.

Chemical Formula 5 is as follows:

[Chemical Formula 5] Liₐ₅Niₓ₅Co_{y5}M⁶_{z5}M⁷_{w5}O_{2-b5}X_{b5}.

In Chemical Formula 5, 0.9≤a5≤1.2, 0.3≤x5≤0.98, 0.01≤y5≤0.69, 0.01≤z5≤0.69, 0≤w5≤0.68, 0.9≤x5+y5+z5+w5≤1.1, and 0≤b5≤0.1, M⁶ is Al, Mn, or a combination thereof, M⁷ is B, Ba, Ca, Ce, Cr, Cu, Fe, Mg, Mo, Nb, Si, Sn, Sr, Ti, V, W, Y, Zn, Zr, or a combination thereof, and X is F, P, S, or a combination thereof.

In Chemical Formula 5, 0.5≤x5≤0.8, 0.05≤y5≤0.35, 0.15≤z5≤0.45, and 0≤w5≤0.3; 0.5≤x5≤0.65, 0.05≤y5≤0.2, 0.3≤z5≤0.45, and 0≤w5≤0.15; or 0.55≤x5≤0.65, 0.05≤y5≤0.15, 0.3≤z5≤0.4, and 0≤w5≤0.1.

In the lithium nickel-based composite oxide, the amount of nickel may be greater than or equal to about 50 mol% based on 100 mol% of the total metal, excluding lithium and may be, for example, from about 50 mol% to about 100 mol%, from about 50 mol% to about 99 mol%, from about 50 mol% to about 90 mol%, from about 50 mol% to about 85 mol%, from about 50 mol% to about 80 mol%, from about 50 mol% to about 75 mol%, from about 50 mol% to about 70 mol%, from about 50 mol% to about 65 mol%, or from about 55 mol% to about 65 mol%. The composite positive electrode active material includes a second positive electrode active material including a lithium nickel-based composite oxide in which the nickel content satisfies the above range, and the first positive electrode active material including the lithium iron phosphate-based compound, and may improve capacity, energy density, and cycle-life characteristics of the rechargeable lithium battery.

The second positive electrode active material is in a form of primary particles, and an average particle diameter of the primary particles of the second positive electrode active material may be greater than or equal to about 2 µm. The average particle diameter of the primary particles of the second positive electrode active material may be, for example, from about 2 µm to about 8 µm, from about 2 µmto about 5 µm, or from about 2 µm to about 4 µm. The average particle diameter of the primary particles of the second positive electrode active material may be greater than the average particle diameter of the primary particles of the aforementioned first positive electrode active material. That is, the primary particles of the first positive electrode active material and the primary particles of the second positive electrode active material within the secondary particles may be distinguished based on particle size. The average particle diameter may be obtained by measuring the sizes of 20 primary particles of the second positive electrode active material from a scanning electron microscope image -wherein, in the case of spherical particles, the diameter is measured, and in the case of non-spherical particles, the square root of the product of the major axis length and the minor axis length is measured-and then calculating the arithmetic mean of the size of each primary particle of the second positive electrode active material.

The second positive electrode active material may be manufactured by a known method or may be a commercially available product. For example, the second positive electrode active material may be prepared by mixing a nickel-based precursor with a lithium source and then performing heat treatment in an oxygen atmosphere to form a second positive electrode active material having a single-particle form.

Here, the single particle form may refer to a structure in which particles exist as an independent phase without mutual aggregation in terms of morphology, and may include a structure that substantially does not have grain boundaries within the particle and is composed of a single particle existing independently. The single particle may be expressed as a monolithic structure, a non-aggregated structure, or a monolith structure, and may be a single crystal.

Here, the single particle may correspond to a primary particle constituting a secondary particle in the composite positive electrode active material described below, and thus, in the present specification, the single particle may be used in the same meaning as the primary particle.

The core particle has a form of secondary particles including a plurality of primary particles of the first positive electrode active material and a plurality of primary particles of the second positive electrode active material. The secondary particle may mean a particle form in which the primary particles and the primary particles are agglomerated. Within the secondary particles of the composite positive electrode active material, there are primary particles of the first positive electrode active material and primary particles of the second positive electrode active material, and the core particle may be in the assembly form in which the primary particles and the primary particles are agglomerated with each other. Some of the primary particles may be the primary particles of the first positive electrode active material, and the remaining primary particles may be the primary particles of the second positive electrode active material. This structure is distinguished from a core-shell structure in which the particles of the first positive electrode active material are coated around the surface of the core of the second positive electrode active material particle, thereby having a shell structure.

The form of secondary particles of the core particle according to some embodiments is different from a conventional form in which a lithium iron phosphate-based compound and a lithium nickel-based composite oxide are simply mixed. When conventionally, a lithium iron phosphate-based compound and a lithium nickel-based composite oxide are mixed and used as a positive electrode active material, there is a problem in that high-temperature storage characteristics of a rechargeable lithium battery deteriorate due to a creation of spaces between the particles of the lithium iron phosphate-based compound and the particles of the lithium nickel-based composite oxide as charge and discharge are repeated after a formation of an electrode plate. However, the composite positive electrode active material according to some embodiments may solve the above problem by including a core particle having a form of secondary particles, more specifically, an assembly form, in which the first positive electrode active material in the form of primary particles including the lithium iron phosphate-based compound and the second positive electrode active material in the form of primary particles including the lithium nickel-based composite oxide are agglomerated.

The secondary particles, i.e., for the core particle, may have a spherical or elliptical spherical geometry because the primary particles of the first positive electrode active material and the primary particles of the second positive electrode active material are closely agglomerated with each other. The secondary particles may be expressed as an assembly. An average particle diameter of secondary particles of the core particle may be, for example, from about 3 µm to about 20 µm, from about 6 µmto about 20 µm, from about 6 µm to about 18 µm, from about 8 µm to about 18 µm, from about 10 µmto about 18 µm, or from about 12 µm to about 18 µm. The average particle diameter of secondary particles of the core particle may be obtained by randomly selecting 20 composite positive electrode active material particles from an electron microscope image of the composite positive electrode active material, measuring the size of each secondary particle, and calculating an arithmetic mean of the size of each secondary particle, wherein the size of each particle is defined as a diameter in the case of a spherical particle, and as a square root of a product of a major axis length and a minor axis length in the case of a non-spherical particle.

The amounts of the first positive electrode active material and the second positive electrode active material within the core particle may be appropriately controlled. The first positive electrode active material may be included in an amount from about 50 wt% to about 99 wt%, from about 55 wt% to about 95 wt%, or from about 60 wt% to about 90 wt% based on 100 wt% of the core particle, and the second positive electrode active material may be included in an amount from about 1 wt% to about 50 wt%, from about 5 wt% to about 45 wt%, or from about 10 wt% to about 40 wt% based on 100 wt% of the core particle. When the first positive electrode active material and the second positive electrode active material are included in the core particle so as to satisfy the above ranges, the battery can operate at a high voltage, and the battery performance, including the initial charge/discharge capacity, efficiency, discharge capacity at low temperatures (e.g., - 20°C), and high-temperature storage characteristics, may be improved overall.

The secondary particles of the core particle may include pores, and the porosity, which is a ratio of the area occupied by pores to the cross-sectional area of the secondary particles, may be from about 10% to about 50%, for example, from about 10% to about 40%, from about 10% to about 30%, or from about 10% to about 25%.

The porosity may mean a ratio of the area occupied by pores in the cross-sectional area of the composite positive electrode active material particles. The porosity may be obtained by cutting a composite positive electrode active material particle using a focused ion beam (FIB) to obtain a cross-section and by measuring a ratio of the area occupied by pores within a cross-section of the composite positive electrode active material particle to a cross-sectional area of the composite positive electrode active material particle using an image analysis program such as Image J on a scanning electron microscope image of the cross-section. A cross-section of the composite positive electrode active materials may be obtained by cutting the composite positive electrode active materials using a focused ion beam (FIB). An image from a scanning electron microscope (SEM) may be acquired, for example, at a magnification of 5,000× to 50,000× under the same imaging conditions. Image analysis may be performed using a fixed threshold value or a consistent threshold-setting method applied equally to all samples. The porosity of the composite positive electrode active materials may be an average value of porosities measured with respect to a plurality of composite positive electrode active materials, and may be, for example, obtained by measuring the porosity of at least 20 individual composite positive electrode active materials and calculating an average value of the porosity at least 20 individual composite positive electrode active materials. When the porosity within the composite positive electrode active material particles satisfies the above ranges, the primary particles may be filled between the pores within the secondary particles during positive electrode compressing, thereby improving the pellet density or positive electrode density and improving the capacity characteristics and energy density of the rechargeable lithium battery.

The number of primary particles of the second positive electrode active material in core particle may be 10 or less, for example 9 or less, 8 or less, 7 or less, or 6 or less, and greater than zero, or 1 or more, 2 or more, or 3 or more. For example, the number of primary particles of the second positive electrode active material in core particle may be in a range of 1 to 10, 2 to 10, 3 to 10, 3 to 9, 3 to 8, 3 to 7, or 3 to 6. The number of primary particles of the second positive electrode active material in the core particle may be determined by counting the number of particles having a particle size of greater than or equal to about 2 µm within a single composite positive electrode active material particle, wherein the particle size refers to a diameter in the case of spherical particles and to a square root of a product of a major axis length and a minor axis length in the case of non-spherical particles. Here, the number of primary particles of the second positive electrode active material may be an average value of the numbers of primary particles of the second positive electrode active material in each of a plurality of composite positive electrode active material particles.

### Coating Portion

The coating portion is disposed on the surface of the aforementioned core particle. The coating portion may be disposed on the surface of a secondary particle in which a plurality of primary particles of the first positive electrode active material and a plurality of primary particles of the second positive electrode active material are agglomerated.

The coating portion includes boron. That is, the coating portion refers to a coating portion including a boron element. The coating portion may include a boron-containing compound. The boron-containing compound may include, for example, boron oxide, lithium borate, or a combination thereof. The boron-containing compound may include, for example, B₂O₂, B₂O₃, B₄O₃, B₄O₅, LiBO₂, Li₃B₇O₁₂, Li₆B₄O₉, Li₃B₁₁O₁₈, Li₂B₄O₇, Li₃BO₃, or a combination thereof.

The boron-containing compound may be present on the surface of the secondary particle in the form of a continuous film, i.e., a coating layer forming a layer, or in the form of a discontinuous film, e.g., an island.

A thickness of the coating portion may vary depending on the firing temperature at the time of coating, but may be, for example, from about 1 nm to about 1.5 µm, from about 1 nm to about 1 µm, from about 1 nm to about 900 nm, from about 1 nm to about 700 nm, from about 1 nm to about 500 nm, from about 1 nm to about 300 nm, or from about 1 nm to about 100 nm. The thickness of the coating portion may be a value calculated by averaging a thickness at a maximum point and a thickness at a minimum point where the boron-containing compound is positioned based on a surface of the secondary particle. The thickness of the coating portion may be measured, for example, by preparing a cross-sectional specimen of the composite positive electrode active material particle using a focused ion beam (FIB) and then performing scanning transmission electron microscopy-energy dispersive spectroscopy (STEM-EDS) analysis on the cross-sectional specimen. For example, distribution of a boron (B) element from the particle surface toward an inner direction may be confirmed through a STEM image and EDS line scan analysis, and a thickness of a region in which the boron element is detected may be measured as the thickness of the coating portion. In addition, distribution of boron near the particle surface may be additionally confirmed using a STEM-EDS mapping image, if necessary.

An amount of boron may be from about 0.01 mol% to about 3 mol%, for example, from about 0.05 mol% to about 2.5 mol%, from about 0.1 mol% to about 2 mol%, from about 0.25 mol% to about 1 mol%, or from about 0.5 mol% to about 1.5 mol% based on 100 mol% of elements, excluding lithium and oxygen, in the entire composite positive electrode active material. The amount of boron may be measured, for example, through ICP (Inductively Coupled Plasma) emission spectrometry. When boron is coated with such an amount as presented above, boron does not act as a resistor, the battery capacity does not decrease, and the diffusion of lithium ions into the composite positive electrode active material becomes easier, improving the initial charge/discharge efficiency. Thus, problems caused by repeated charge/discharge may be suppressed, thereby improving the long cycle-life characteristics of the rechargeable lithium battery.

The boron-containing compound may be disposed not only on the surface of the secondary particle but also on the surface of the primary particles and primary particles inside the secondary particle. The boron-containing compound may be coated along the interface between the primary particles of the first positive electrode active material and primary particles of the second positive electrode active material inside the secondary particle, and the portion where the boron-containing compound is coated along the interface between the primary particles of the first positive electrode active material and primary particles of the second positive electrode active material inside the secondary particle may be expressed as a "grain boundary coating portion" to distinguish the portion coated along the interface from the coating portion disposed on the surface of the secondary particle. The composite positive electrode active material may further include a grain boundary coating portion including boron on the surfaces of the primary particles and primary particles inside the secondary particles. The inside of the secondary particle means the entire inside excluding the surface of the secondary particle, and, for example, an inside of the secondary particle can mean the entire inside or a portion of the inside from a depth of approximately 2 µm from the outer surface and may also be expressed as a portion that is not touched by distilled water when washing the composite positive electrode active material secondary particle with distilled water. In this way, when a boron-containing compound is coated on the secondary particle surface and on the internal grain boundary surface of a composite positive electrode active material, boron does not act as a resistor, and the structural collapse or breakage of the composite positive electrode active material due to charge and discharge may be effectively suppressed.

The amount of boron present on the surface of the secondary particle may be greater than the amount of boron present at the internal grain boundary, for example, four times or more. A weight ratio of boron in the surface coating portion to boron in the grain boundary coating portion may be from about 70:30 to about 98:2, for example, from about 75:25 to about 97:3 or from about 80:20 to about 95:5. Boron may play a role in improving performance without acting as a resistor in the composite positive electrode active material and may simultaneously improve the capacity characteristics and cycle-life characteristics of rechargeable lithium batteries.

The composite positive electrode active material may further include a carbon coating layer on the secondary particle surface of the core particle, in addition to the aforementioned coating portion. The carbon coating layer may improve electrical conductivity of the composite positive electrode active material and may, therefore, reduce the resistance of the positive electrode including the composite positive electrode active material.

The carbon coating layer may be the same as or similar to the carbon coating layer on the surface of the primary particles of the first positive electrode active material of the aforementioned composite positive electrode active material, and a description of the carbon coating layer is, therefore, omitted in this section.

### Method of Preparing Composite Positive Electrode Active Material

A method of preparing a composite positive electrode active material according to some embodiments includes: preparing a first positive electrode active material including a lithium iron phosphate-based compound and being in a form of primary particles; mixing and wet milling the first positive electrode active material, a second positive electrode active material including a lithium nickel-based composite oxide and in a form of primary particles, and a boron raw material to prepare a first slurry; and spray drying the first slurry to prepare a first dried product.

A lithium iron phosphate-based compound, which has excellent structural stability, high heat resistance, and price competitiveness, is attracting attention. However, although the lithium iron phosphate-based compound has excellent cycle-life characteristics, cycle-life characteristics of the lithium iron phosphate-based compound deteriorate when used at high voltages, so their usable voltage is limited.

There have been attempts to use a simple mixture of a lithium iron phosphate-based compound and a lithium nickel-based composite oxide to achieve high capacity, but, although this allows for high energy density, high voltage use, and high capacity, high-temperature storage characteristics may be deteriorated.

According to a method of preparing a composite positive electrode active material according to some embodiments, in order to secure price competitiveness, a lithium iron phosphate-based compound is used, but lithium iron phosphate-based compounds are prepared in the assembly form and are pulverized to separate the lithium iron phosphate-based compounds into primary particles. The primary particles of the lithium iron phosphate-based compound, the primary particles of the lithium nickel-based composite oxide and a boron raw material are mixed, creating a mixture, and then wet milled to prepare a slurry, and the slurry is then spray dried to provide a composite positive electrode active material having a single secondary particle form and having a boron-containing compound coated on a surface of the single secondary particle form, to enable high energy density, use at high voltage, and high capacity. The mixing of the primary particles of the lithium iron phosphate-based compound, the primary particles of the lithium nickel-based composite oxide and the boron raw material may include mixing the primary particles of the lithium iron phosphate-based compound and the primary particles of the lithium nickel-based composite oxide, and then adding the boron raw material to the resultant mixture.

The assembly including the boron-coated lithium iron phosphate-based compound and the boron-coated lithium nickel-based composite oxide have the same advantages as a simple mixed form, while at the same time solving problems occurring in the simple mixed form. More specifically, the composite positive electrode active material prepared according to some embodiments may have a single secondary particle form, i.e., a type of assembly form in which the primary particles of the lithium iron phosphate-based compound and the primary particles of the lithium nickel-based composite oxide are agglomerated, and which is coated with a boron-containing compound on the surface of the assembly, so that low-temperature discharge capacity, low-rate and high-rate cycle-life characteristics, and high-temperature storage characteristics may be improved for the rechargeable lithium battery.

In the preparing method below, terms expressed using "first" and "second" in addition to the first positive electrode active material, and the second positive electrode active material are expressed to identify the process of preparing a composite positive electrode active material using the first positive electrode active material, the second positive electrode active material, and the boron raw material, and the process of preparing the first positive electrode active material, respectively. In the process of preparing the composite positive electrode active material using the first positive electrode active material, the second positive electrode active material, and the boron raw material, a corresponding use of "slurry" may be indicated by "first slurry"; whereas, in the process of preparing the first positive electrode active material, a corresponding use of "slurry" may be indicated as "second slurry."

For convenience, the process of preparing a composite positive electrode active material using the first positive electrode active material, the second positive electrode active material, and the boron raw material in the order described in the claims is expressed as "first", and the process of preparing the first positive electrode active material is expressed as "second." However, it should be understood that "first" and "second" do not indicate the order between them.

### Preparing First Positive Electrode Active Material

Preparing a first positive electrode active material includes a process of preparing a first positive electrode active material including a lithium iron phosphate-based compound and being in a form of primary particles. The first positive electrode active material including the lithium iron phosphate-based compound and in the form of primary particles may be prepared according to the method described below, or a commercially available product may be obtained and used.

The preparing of the first positive electrode active material including the lithium iron phosphate-based compound and in the form of primary particles may include wet milling an iron phosphate-based precursor, a lithium raw material, and a carbon raw material mixed in a second solvent to prepare a second slurry; adding the wet-milled second slurry to a spray dryer and spray-drying the second slurry to prepare a second dried product; firing the second dried product to prepare a second fired product; and the pulverizing the second fired product. Through the pulverizing the second fired product, the first positive electrode active material including the lithium iron phosphate-based compound and in the form of primary particles may be obtained. Hereinafter, the steps for preparing the first positive electrode active material are sequentially described.

First, the second slurry may be prepared by mixing an iron phosphate-based precursor, a lithium raw material, and a carbon raw material in a second solvent and wet milling the mixture. The preparing of the second slurry may include mixing an iron phosphate-based precursor and a lithium raw material to prepare a raw material mixture, preparing a carbon raw material, and mixing the raw material mixture and the carbon raw material, adding a second solvent, and performing wet milling to prepare a second slurry. A mixing weight ratio of the raw material mixture and the carbon raw material is not specifically limited but may be, for example, from about 5:5 to about 99:1, from about 6:4 to about 99:1, from about 7:3 to about 99:1, from about 8:2 to about 99:1, or from about 9:1 to about 99:1.

The iron phosphate-based precursor may be an iron phosphate precursor such as iron phosphate (FePO₄) and iron(II) phosphate (Fe₃(PO₄)₂), or may be formed by adding a phosphorus raw material such as phosphoric acid (H₃PO₄), ammonium dihydrogen phosphate (NH₄H₂PO₄), diammonium hydrogen phosphate ((NH₄)₂HPO₄), or trisodium phosphate (Na₃PO₄) to an iron raw material such as iron trioxide (Fe₂O₃), iron oxalate (FeC₂O₄), or iron hydroxide (Fe(OH)₃). In addition, the iron phosphate-based precursor may be a manganese iron phosphate precursor formed by adding a manganese raw material such as manganese oxide, manganese carbonate, manganese sulfate, or manganese nitrate to the iron phosphate precursor. The iron phosphate-based precursor may be used without limitation as long as the iron phosphate-based precursor is a known material used in solid-phase reaction.

The lithium raw material may be, for example, Li₂CO₃, LiOH, a hydrate thereof, or a combination thereof.

The carbon raw material may include glucose, sucrose, lactose, starch, oligosaccharide, polyoligosaccharide, fructose, cellulose, poly(furfuryl alcohol), polyethylene glycol, a block copolymer of ethylene and ethylene oxide, a vinyl-based resin, a cellulose-based resin, a phenolic resin, a pitch-based resin, a tar-based resin, or a combination thereof. For example, as the carbon raw materials, a mixture of glucose and polyethylene glycol may be used, and a mixing ratio by weight is not specifically limited but may be, for example, from about 10:90 to about 90:10, from about 20:80 to about 80:20, from about 30:70 to about 70:30, from about 40:60 to about 60:40, or from about 50:50.

The wet milling may be performed by adding a second solvent, and the second solvent may be any one of ethylene glycol (EG), diethylene glycol (DEG), triethylene glycol (TEG), tetraethylene glycol (TetraEG), propylene glycol (PG), polyethylene glycol (PEG), polypropylene glycol (PPG), ethanol, water, and acetone.

The wet milling may be performed using bead mill, ball mill, vibration mill, or colloid mill equipment. For example, in some embodiments, the wet milling may be performed using a ball milling method with zirconia balls, wherein the wet milling may be conducted by rotating a milling container at a rotational speed of from about 50 rpm to about 2000 rpm for about 1 hour to about 10 hours.

In the preparing of the second slurry by wet milling, a raw material including Al, Ca, Ce, Cr, Cu, La, Mg, Mn, Mo, Nb, Ni, Sn, Sr, Ti, V, W, Y, Zn, Zr, or a combination thereof may be further added to the slurry. A raw material including Al, Mg, Mn, Ti, V, or a combination thereof may be added. The raw material including Al, Mg, Ti, V, or the combination thereof may be further added as a type of doping element, and the Al, Mg, Ti, V, or the combination thereof may be added in an amount from about 0.1 mol% to about 0.5 mol%, from about 0.2 mol% to about 0.5 mol%, from about 0.3 mol% to about 0.5 mol%, or about 0.4 mol%, based on a total metal, excluding lithium, in the lithium iron phosphate-based compound of the first positive electrode active material. A raw material containing Ti may be further added to the second slurry, and an amount of Ti may be added so as to be from about 0.1 mol% to about 0.5 mol%, from about 0.2 mol% to about 0.5 mol%, from about 0.3 mol% to about 0.5 mol%, or about 0.4 mol%, based on a total metal, excluding lithium, in the first positive electrode active material. Accordingly, rate characteristics and cycle-life characteristics may be improved for the rechargeable lithium battery.

Next, the wet-milled second slurry may be added to a spray dryer and spray-dried to produce a second dried product.

The wet-milled second slurry may be injected into a spray dryer and sprayed to generate droplets containing a uniform desired composition, and then the formed droplets may be dried to produce a second dried product.

The spray dryer may include an ultrasonic spray device, a one- and two-fluid air nozzle spray device, an ultrasonic nozzle spray device, a filter expansion droplet generator (FEAG), and a disk-type droplet generator. Any known spray dryer may be used.

An amount of the second slurry added may vary depending on the spray dryer but may be appropriately adjusted. For example, at a blower speed of about 50 Hz and an addition pressure of about 0.5 MPa, an addition speed of the second slurry may be less than or equal to about 1 kg/min, for example, less than about 1 kg/min, less than or equal to about 0.9 kg/min, less than or equal to about 0.8 kg/min, less than or equal to about 0.7 kg/min, less than or equal to about 0.6 kg/min, or less than or equal to about 0.5 kg/min, and greater than or equal to about 0.01 kg/min, greater than or equal to about 0.05 kg/min, greater than or equal to about 0.1 kg/min, greater than or equal to about 0.15 kg/min, greater than or equal to about 0.2 kg/min, greater than or equal to about 0.3 kg/min, or greater than or equal to about 0.4 kg/min. The addition speed of the slurry is a value converted on a solid content basis, and is defined as an amount of the slurry supplied per minute (min) based on a mass of solid content in the slurry. When the addition speed of the second slurry added to the spray dryer satisfies the above ranges, secondary particles composed of primary particles, each having a uniform size, may be produced, and an average size of the primary particles may be adjusted to less than or equal to about 200 nm, and a size of the secondary particles may also be controlled such that the size of the secondary particles is uniform.

The spray drying may be performed at a temperature of greater than or equal to about 100°C, for example, at a temperature from about 150°C to about 400°C, about 150°C to about 300°C, from about 200°C to about 300°C, or from about 200°C to about 250°C for drying the components and evaporating the solvent.

Next, the second dried product may be fired to produce a second fired product.

In the preparing of the second fired product, the firing may be performed under vacuum or inert gas and at a temperature from about 700°C to about 1000°C, for example, from about 725°C to about 900°C or from about 750°C to about 800°C. The inert gas may be argon or nitrogen.

The second fired product may be in a form of secondary particles in which a plurality of primary particles is agglomerated. More specifically, the secondary particles of the second fired product may have a spherical or ellipsoidal geometry as the primary particles are closely agglomerated with each other. An average particle diameter of the secondary particles may be, for example, from about 3 µm to about 20 µm, from about 5 µm to about 18 µm, or from about 7 µm to about 15 µm. The average particle diameter of the secondary particles may be obtained by randomly selecting 20 secondary particles from an electron microscope image of the second fired product, measuring the size of each secondary particle, and calculating an arithmetic mean of the size of each secondary particle, wherein the size of each particle is defined as a diameter in the case of a spherical particle, and as a square root of a product of a major axis length and a minor axis length in the case of a non-spherical particle.

The second fired product may include pores, and the porosity may be from about 10% to about 50%, for example, from about 10% to about 40%, from about 10% to about 30%, or from about 10% to about 25%. The porosity may be the ratio of the area occupied by the pores within the second fired product to the cross-sectional area of the second fired product measured using an image analysis program such as Image J in a scanning electron microscope image of the cross-section of the second fired product. A cross-section of the secondary particles may be obtained by cutting the second fired product using a focused ion beam (FIB). An image from a scanning electron microscope (SEM) may be acquired, for example, at a magnification of 5,000× to 50,000× under the same imaging conditions. Image analysis may be performed using a fixed threshold value or a consistent threshold-setting method applied equally to all samples. The porosity of the second fired products may be an average value of porosities measured with respect to a plurality of the second fired products, and may be, for example, obtained by measuring the porosity of at least 20 individual second fired products and calculating an average value of the porosity at least 20 individual second fired products.

The second fired product may further include a carbon coating layer on the surfaces of the secondary particles, the surfaces of the primary particles constituting the secondary particles, or the surfaces of both. If the second fired product is later pulverized to prepare the first positive electrode active material of primary particles, the carbon coating layer may improve the electrical conductivity of the first positive electrode active material and may decrease the resistance of the positive electrode. The carbon coating layer may be formed by a firing process of the above-mentioned carbon raw materials.

Next, the second fired product may be pulverized.

Pulverizing may be performed using equipment such as a jet mill, a ball mill, a bead mill, or a sand mill.

The pulverization speed during the above pulverizing is not specifically limited as long as the second fired product in the assembly form is separated into primary particles constituting the assembly, and, for example, a pulverization speed may exceed about 2000 rpm or may be about 3000 rpm to about 6000 rpm or from about 4000 rpm to about 6000 rpm. The pulverization of the above second fired product may be performed under conditions where the secondary particles may be pulverized and separated into a plurality of primary particles. If the pulverization speed is less than 2000 rpm, the secondary particles may not be pulverized and may exist in the assembly form. If the pulverization speed is greater than about 6000 rpm, the pulverized and separated primary particles may be damaged.

Through the pulverization process of the second fired product, the first positive electrode active material including the lithium iron phosphate-based compound and being in the form of primary particles may be prepared. The first positive electrode active material prepared according to the aforementioned method may be used. Specific details regarding the first positive electrode active material including the lithium iron phosphate-based compound may be the same as or similar to that of the composite positive electrode active material section, and a description of the first positive electrode active material including the lithium iron phosphate-based compound is, therefore, omitted in this section.

### Preparing First Slurry

The first positive electrode active material, the second positive electrode active material including the lithium nickel-based composite oxide and in the form of primary particles, and the boron raw material are mixed and wet milled to prepare a first slurry. The method of preparing a composite positive electrode active material according to some embodiments is not to individually coat the boron-containing compound after preparing the aforementioned secondary particles but is, rather, to mix the first positive electrode active material, the second positive electrode active material, and the boron raw material and to form the assembly by spray drying the first positive electrode active material, the second positive electrode active material, and the boron raw material in the spray dryer, thereby forming the coating portion at the same time. Not only is the preparing method efficient, but the overall battery performance, including the pellet density of the final composite positive electrode active material, initial charge/discharge capacity, efficiency, and low-temperature discharge capacity, may be improved for the rechargeable lithium battery.

The second positive electrode active material includes a lithium nickel-based composite oxide. The second positive electrode active material including lithium nickel-based composite oxide may be the same as or similar to those described in the composite positive electrode active material section, and, thus, a description of the second positive electrode active material including lithium nickel-based composite oxide are omitted in this section.

The method of mixing the first positive electrode active material and the second positive electrode active material is not particularly limited, and for example, a mixer may be used.

A weight ratio of mixing of the first positive electrode active material and the second positive electrode active material may be from about 50:50 to about 99:1, from about 55:45 to about 95:5, or from about 60:40 to about 90:10. When the weight ratio of mixing of the first positive electrode active material and the second positive electrode active material satisfies the above ranges, it is possible to achieve high energy density, high voltage operation, and high capacity while securing price competitiveness. In addition, when a second positive electrode active material having a relatively large average particle diameter is included in an excessive amount, it is difficult to properly perform spray drying, and even if spray drying is performed, it may be difficult to form an assembly such as done in some embodiments.

The boron raw material is a compound including boron and may include, for example, H₃BO₃, HBO₂, B₂O₃, C₆H₅B(OH)₂, (C₆H₅O)₃B, [CH₃(CH₂)₃O]₃B, (C₃H₇O)₃B, C₃H₉B₃O₆, C₁₃H₁₉BO₃, or a combination thereof.

An amount of boron in the boron raw material may be from about 0.01 parts by mole to about 3 parts by mole, for example, from about 0.05 parts by mole to about 2.5 parts by mole, from about 0.1 parts by mole to about 2 parts by mole, from about 0.25 parts by mole to about 1 part by mole, or from about 0.5 parts by mole to about 1.5 parts by mole based on 100 parts by mole of elements, excluding lithium and oxygen in the total of the first positive electrode active material and the second positive electrode active material. When the amount of boron in the boron raw material satisfies the above ranges, boron in the composite positive electrode active material may play a role in improving the performance of a rechargeable lithium battery without acting as a resistor, thereby improving the capacity and the cycle-life characteristics of the rechargeable lithium battery. If boron in the boron raw material is added in an amount in excess of the above ranges, boron may act as resistor in the composite positive electrode active material, thereby reducing the capacity and cycle-life of the battery. For example, in some embodiments, the wet milling may be performed using a ball milling method with zirconia balls, wherein the wet milling may be conducted by rotating a milling container at a rotational speed of from about 10 rpm to about 100 rpm for about 10 minutes to about 3 hours.

The first slurry may be prepared by adding a first solvent to the first positive electrode active material, the second positive electrode active material, and the boron raw material during wet milling, and the specific type of the first solvent is as described for the second solvent. A wet milling step may be performed using a method such as ultrasonic dispersion, stirring dispersion, using a homogenizer, using a high-shear mixer, using a jet mill, ball milling, or bead milling, and the wet milling method is not specifically limited as long as wet milling method is a method of wet milling the first positive electrode active material, the second positive electrode active material, and the boron raw material. For example, in some embodiments, the wet milling may be performed using a ball milling method with zirconia balls, wherein the wet milling may be conducted by rotating a milling container at a rotational speed of from about 10 rpm to about 100 rpm for about 10 minutes to about 3 hours.

### Preparing First Dried Product

Preparing a first dried product includes spray drying the first slurry.

The first slurry may be added to a spray dryer and sprayed to generate droplets including a uniform composition, and then the formed droplets may be dried to prepare a first dried product. The solvent in the droplets evaporates, and remaining solids may be dried into a particle form.

The spray dryer may include an ultrasonic spray device, one- and two-fluid air nozzle spray device, an ultrasonic nozzle spray device, a filter expansion droplet generator (FEAG), and a disk-type droplet generator. Any known spray dryer may be used.

An amount of the first slurry added may vary depending on the spray dryer but may be appropriately adjusted. The addition speed of the first slurry may be less than or equal to about 1 kg/min, for example, less than about 1 kg/min, less than or equal to about 0.9 kg/min, less than or equal to about 0.8 kg/min, less than or equal to about 0.7 kg/min, less than or equal to about 0.6 kg/min, or less than or equal to about 0.5 kg/min, and greater than or equal to about 0.01 kg/min, greater than or equal to about 0.05 kg/min, greater than or equal to about 0.1 kg/min, greater than or equal to about 0.15 kg/min, greater than or equal to about 0.2 kg/min, greater than or equal to about 0.3 kg/min, or greater than or equal to about 0.4 kg/min. The addition speed of the first slurry is a value converted on a solid content basis, and is defined as an amount of the first slurry supplied per minute (min) based on a mass of solid content in the first slurry. If the addition speed of the first slurry added to the spray dryer satisfies the above ranges, the drying efficiency may be improved, a powder having a narrow particle size distribution and a relatively uniform geometry may be formed, and clogging and contamination inside the dryer may be prevented.

The spray drying may be performed at a temperature of greater than or equal to about 100°C, for example, from about 150°C to about 400°C, from about 150°C to about 300°C, or from about 200°C to about 250°C for drying the components and evaporating the solvent.

The first dried product obtained according to the above steps may have a particle form including primary particles of the first positive electrode active material and primary particles of the second positive electrode active material and may have a form of secondary particles in which the primary particles of the first positive electrode active material and the primary particles of the second positive electrode active material are agglomerated, and the secondary particles may be expressed as an assembly. The first dried product includes a coating portion disposed on the surface of the secondary particle and including boron and may optionally include a grain boundary coating portion including boron inside the secondary particle. The first dried product may correspond to or be identical to the composite positive electrode active material in the present specification.

The method of preparing the composite positive electrode active material may further include firing the first dried product to prepare a first fired product, after the adding of the first slurry to the spray dryer and spray drying the first slurry to prepare a first dried product. Preparing the first fired product may be expressed as a first firing step to distinguish firing the first dried product from spray drying and firing the second slurry. The composite positive electrode active material may be further strengthened by performing a first firing step after spray drying, thereby further stabilizing a crystal structure of the composite positive electrode active material and significantly improving the electrochemical characteristics, mechanical strength, and cycle-life stability of the composite positive electrode active material.

The first firing step may be performed under vacuum or inert gas and at a temperature from about 300°C to about 1000°C, for example, from about 300°C to about 500°C, or from about 350°C to about 450°C. The inert gas may be argon or nitrogen. If the above firing temperature satisfies the above ranges, electrochemical characteristics, mechanical strength, and cycle-life stability may be greatly improved for the composite positive electrode active material.

The first fired product may have a form of secondary particles including primary particles of the first positive electrode active material and primary particles of the second positive electrode active material. The first fired product includes a coating portion disposed on the surface of the secondary particle and including boron and may optionally include a grain boundary coating portion including boron inside the secondary particle. The first fired product may also correspond to or be identical to the composite positive electrode active material in this specification.

In the case of a composite positive electrode active material manufactured according to a method of preparing a composite positive electrode active material according to some embodiments, the overall battery performance may be improved for the rechargeable lithium battery, and the high-temperature storage characteristics may be improved for the rechargeable lithium battery compared to batteries manufactured using conventional simple mixing for the creation of a positive electrode active material.

### Rechargeable Lithium Battery

A rechargeable lithium battery according to some embodiments includes: a positive electrode including a positive electrode current collector, and a positive electrode active material layer disposed on the positive electrode current collector and including the aforementioned composite positive electrode active material; a negative electrode; and an electrolyte. The above rechargeable lithium battery may include a positive electrode, a negative electrode, a separator between the positive electrode and the negative electrode, and an electrolyte.

A rechargeable lithium battery according to some embodiments may have improved battery performance overall by including the composite positive electrode active material described above and, specifically, may have improved low-temperature capacity and cycle-life characteristics.

The rechargeable lithium battery may have improved low-temperature capacity such that the discharge capacity at low temperature (-20°C) is greater than or equal to about 91 mAh/g. The discharge capacity of the rechargeable lithium battery at a low temperature (-20°C) may be greater than or equal to about 92 mAh/g, greater than or equal to about 93 mAh/g, greater than or equal to about 94 mAh/g, greater than or equal to about 95 mAh/g, greater than or equal to about 96 mAh/g, greater than or equal to about 97 mAh/g, or greater than or equal to about 98 mAh/g and may be less than or equal to about 100 mAh/g. The discharge capacity of the rechargeable lithium battery at low temperature (-20°C) may refer to the initial discharge capacity of the battery with respect to the weight of the positive electrode active material and may be measured according to the method described in the Evaluation Example 2.

In addition, when the high-temperature storage characteristics was evaluated by measuring the capacity retention rate after leaving the rechargeable lithium battery at a high temperature (45°C) for 7 days, the high-temperature capacity retention rate is greater than or equal to about 80%, indicating that the high-temperature storage characteristics may be improved. The high-temperature capacity retention ratio of the rechargeable lithium battery (e.g., the ratio of the discharge capacity after being left at 45°C for 7 days to the initial discharge capacity) may be greater than or equal to about 81%, greater than or equal to about 82%, greater than or equal to about 83%, greater than or equal to about 84%, or greater than or equal to about 85% and may be less than or equal to about 100%, less than or equal to about 95%, or less than or equal to about 90%.

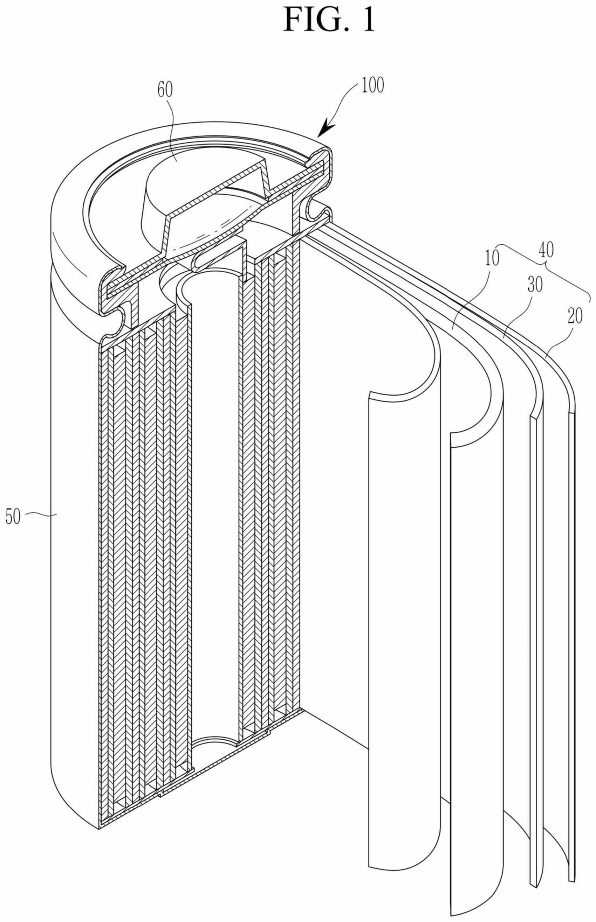

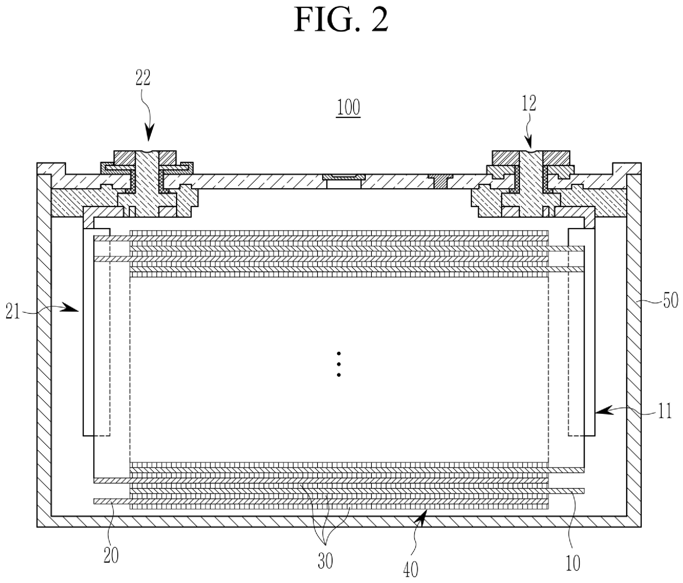

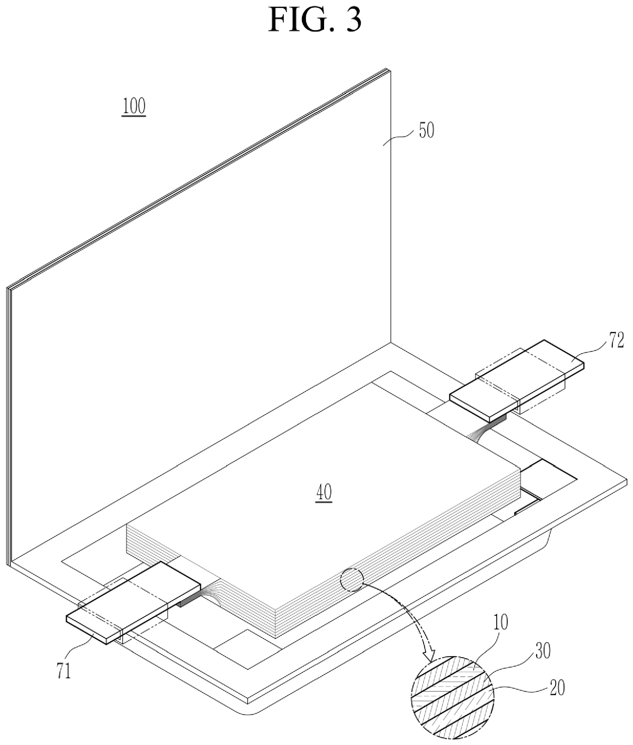

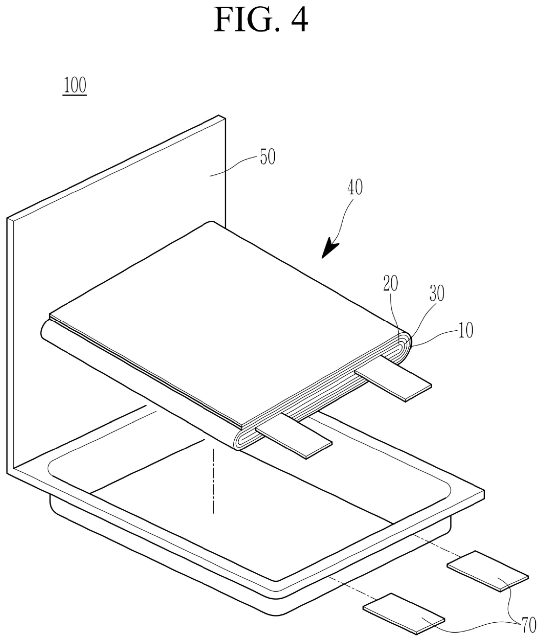

The rechargeable lithium battery may be classified into geometries of a cylinder, a prism, a pouch, or a coin. FIG. 1 is a schematic view showing a cross-section of a cylindrical rechargeable lithium battery cut along a vertical axis and an electrode assembly 40 extending from the cylindrical rechargeable lithium battery according to some embodiments of the present disclosure. FIG. 2 is a cross-sectional view of a prismatic rechargeable lithium battery according to some embodiments of the present disclosure. FIGS. 3 and 4 are each a schematic exploded perspective view of a pouch-type rechargeable lithium battery according to some embodiments of the present disclosure. The rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown).

The rechargeable lithium battery 100 may include a sealer 60 that seals the case 50 as shown in FIG. 1. Additionally, in FIG. 2, the rechargeable lithium battery 100 may include a positive electrode lead tab 11, a positive electrode terminal 12, a negative electrode lead tab 21, and a negative electrode terminal 22. The rechargeable lithium battery 100 may include an electrode tab 70 that serves as an electrical path for conducting current formed in an electrode assembly 40 to the outside. The electrode tab 70 may be disposed in the same direction as in FIG. 4, or the positive electrode tab 71 and the negative electrode tab 72 may be disposed in opposite directions as in FIG. 3.

### Positive Electrode

The positive electrode current collector is not particularly limited as long as the positive electrode current collector has conductivity and does not cause an undesirable chemical change in the rechargeable lithium battery and may be an aluminum foil or a stainless-steel foil having a thickness from about 10 µm to about 15 µm.

The positive electrode active material layer includes the aforementioned composite positive electrode active material. The specific details of the composite positive electrode active material may be the same as or similar to those described above, and those details are, therefore, omitted in this section.

An amount of the composite positive electrode active material may be from about 60 wt% to about 99.9 wt%, from about 70 wt% to about 99.8 wt%, from about 80 wt% to about 99 wt%, or from about 90 wt% to about 98 wt% based on 100 wt% of the positive electrode active material layer.

The positive electrode active material layer may optionally further include a binder, a conductive material, or a combination thereof.

The binder may serve to adhere the composite positive electrode active material particles well to each other and also to adhere the composite positive electrode active material well to the positive electrode current collector. Examples of the binder may include polyvinyl alcohol, carboxymethyl cellulose, hydroxypropyl cellulose, diacetyl cellulose, polyvinyl chloride, carboxylated polyvinyl chloride, polyvinyl fluoride, polymers containing ethylene oxide, polyvinyl pyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, polyester resin or nylon, but the binder is not limited thereto.

The conductive material is included to provide electrode conductivity, and any electrically conductive material may be used as a conductive material unless the electrically conductive material causes an undesirable chemical change in a battery. Examples of the conductive material may include a carbon-based material such as natural graphite, artificial graphite, carbon black, acetylene black, Ketjen black, a carbon fiber, a carbon nanofiber, or a carbon nanotube; a metal-based material of a metal powder or a metal fiber including copper, nickel, aluminum, or silver; a conductive polymer such as a polyphenylene derivative; or a mixture thereof.

In the positive electrode active material layer, an amount of the binder may be from about 0.1 wt% to about 5 wt% based on 100 wt% of the positive electrode active material layer, and an amount of the conductive material may be from about 0.1 wt% to about 5 wt% based on 100 wt% of the positive electrode active material layer.

The positive electrode active material layer may further include other positive electrode active materials within a range that does not impede the purpose of the present disclosure in addition to the aforementioned components or may further include an irreversible positive electrode additive.

In addition to the aforementioned composite positive electrode active material, the positive electrode active material layer may further include a positive electrode active material having a form of primary particles and including the aforementioned lithium iron phosphate-based compound (hereinafter, "third positive electrode active material") and/or a positive electrode active material having a form of primary particles and including the aforementioned lithium nickel-based composite oxide (hereinafter, "fourth positive electrode active material"). Here, the third positive electrode active material and/or the fourth positive electrode active material may each independently be those in which the first positive electrode active material and/or the second positive electrode active material included in the composite positive electrode active material are not assembled and are present in a separated state. In this case, the average particle diameter of the primary particles of the third positive electrode active material may be the same as described above for the first positive electrode active material, and the average particle diameter of the primary particles of the fourth positive electrode active material may be the same as described above for the second positive electrode active material. Here, the third positive electrode active material and/or the fourth positive electrode active material are present in a non-aggregated, separated state without being agglomerated with the above-described composite positive electrode active material to form an assembled structure.

When the positive electrode active material layer further includes the third positive electrode active material and/or the fourth positive electrode active material in addition to the composite positive electrode active material, a weight ratio of the composite positive electrode active material to the third positive electrode active material, the fourth positive electrode active material, or a combination thereof may be about 1:9 to about 9:1 and may be appropriately added depending on the purpose. The positive electrode active material including a lithium iron phosphate-based compound having the form of primary particles may further include the aforementioned carbon coating layer on the surface of the primary particle, and, since the specific details of the carbon coating layer are the same as those described above, a description of the carbon coating layer is omitted in this section.

The irreversible positive electrode additive refers to a compound that acts as a sacrificial positive electrode that can compensate for the conversion to irreversible Li that no longer participates in the charge/discharge reaction by participating in the formation of a SEI (solid electrolyte interface) film on the negative electrode surface during charge/discharge. The irreversible positive electrode additive is a compound that can be decomposed during the formation process to provide Li and does not participate in the subsequent charge/discharge process. By adding such an irreversible positive electrode additive, the consumed lithium may be replenished, thereby compensating for lithium loss and improving the energy density, cycle-life, and stability of the rechargeable lithium battery.

The irreversible positive electrode additive may include a lithium iron-based oxide, a lithium cobalt-based oxide, a lithium nickel-based oxide, or a combination thereof.

The lithium iron-based oxide may be Li₅FeO₄, LiFeO₂, LiFe₅O₈, or a combination thereof, and among these, using Li₅FeO₄ may provide a lot of lithium in the formation process, which may greatly compensate for irreversible lithium and, thus, may achieve the effect of the irreversible positive electrode additive.

The lithium cobalt-based oxide may be Li₆CoO₄, and the use of Li₆CoO₄ may provide a lot of lithium in the formation process, which can greatly compensate for the irreversible lithium and, thus, may achieve the effect of the irreversible positive electrode additive.

The lithium nickel-based oxide may be Li₂NiO₂, and the use of Li₂NiO₂ may provide a lot of lithium in the formation process, which may consequently compensate for a lot of irreversible lithium and, thus, may achieve the effect of the irreversible positive electrode additive.

An average particle diameter D₅₀ of the irreversible positive electrode additive is not specifically limited but may be, for example, from about 0.5 µm to about 20 µm, for example, from about 0.5 µm to about 10 µm, from about 0.5 µm to about 5 µm, or from about 0.5 µm to about 3 µm.

### Negative Electrode

A negative electrode for a rechargeable lithium battery includes a negative electrode current collector and a negative electrode active material layer on the negative electrode current collector. The negative electrode active material layer includes a negative electrode active material and may optionally further include a binder, a conductive material, or a combination thereof.

The negative electrode current collector is not particularly limited as long as the negative electrode current collector has conductivity without causing undesirable chemical changes in the rechargeable lithium battery and may be a copper foil having a thickness from about 10 µm to about 15 µm.

The negative electrode active material includes a material capable of reversibly intercalating/deintercalating lithium ions, lithium metal, an alloy of lithium metal, a material capable of doping and dedoping lithium, or a transition metal oxide.

The material capable of reversibly intercalating/deintercalating the lithium ions may be a carbon-based negative electrode active material, for example, crystalline carbon, amorphous carbon, or a combination thereof. The crystalline carbon may be natural graphite or artificial graphite with irregular, sheet, flake, spherical or fiber geometry. The amorphous carbon may be a soft carbon, a hard carbon, a mesophase pitch carbonization product, or calcined coke.

As the lithium metal alloy, an alloy of lithium and a metal selected from Na, K, Rb, Cs, Fr, Be, Mg, Ca, Sr, Si, Sb, Pb, In, Zn, Ba, Ra, Ge, Al, and Sn may be used.

The material capable of doping and dedoping lithium may be a Si-based negative electrode active material or a Sn-based negative electrode active material. The Si-based negative electrode active material may be silicon, a silicon-carbon composite, SiOx (0<x≤2), a Si-Q alloy (wherein Q is an element selected from an alkali metal, an alkaline earth metal, a Group 13 element, a Group 14 element [excluding Si], a Group 15 element, a Group 16 element, a transition metal, a rare earth element, and a combination thereof and may be, for example, selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof), or a combination thereof. The Sn-based negative electrode active material may be Sn, SnO₂, a Sn alloy, or a combination thereof.

The silicon-carbon composite may be a composite of silicon and amorphous carbon. The average particle diameter D₅₀ of the silicon-carbon composite particles may be, for example, from about 0.5 µm to about 20 µm. According to some embodiments, the silicon-carbon composite may be in the form of silicon particles and amorphous carbon coated on the surface of the silicon particles. In some embodiments, the silicon-carbon composite may include a secondary particle (core) in which silicon primary particles are assembled and an amorphous carbon coating layer (shell) on a surface of the secondary particle. The amorphous carbon may also be present between the silicon primary particles; the silicon primary particles may be coated with amorphous carbon. The secondary particles may exist dispersed in an amorphous carbon matrix.

The silicon-carbon composite may further include crystalline carbon. The silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon, hard carbon, a mesophase pitch carbonized product, or calcined coke.

When the silicon-carbon composite includes silicon and amorphous carbon, an amount of the silicon may be from about 10 wt% to about 50 wt%, and an amount of the amorphous carbon may be from about 50 wt% to about 90 wt% based on 100 wt% of the silicon-carbon composite. In addition, when the composite includes silicon, amorphous carbon, and crystalline carbon, an amount of silicon may be from about 10 wt% to about 70 wt%, an amount of crystalline carbon may be from about 1 wt% to about 60 wt%, and an amount of amorphous carbon may be from about 15 wt% to about 50 wt% based on 100 wt% of the silicon-carbon composite.

Additionally, a thickness of the amorphous carbon coating layer may be from about 5 nm to about 100 nm. An average particle diameter D₅₀ of the silicon particles (primary particles) may be from about 10 nm to about 1 µm or from about 10 nm to about 200 nm. When a definition is not otherwise provided, an average particle diameter D₅₀ indicates a diameter of a particle where a cumulative volume is about 50 vol% in a particle size distribution. The silicon particles may be present as silicon alone, in the form of a silicon alloy, or in an oxidized form. The oxidized form of the silicon may be represented as SiOₓ (0<x≤2). The atomic ratio of Si:O, which indicates the degree of oxidation, may be from about 99:1 to about 33:67.

The Si-based negative electrode active material or Sn-based negative electrode active material may be mixed with the carbon-based negative electrode active material. When using a mixture of a Si-based negative electrode active material or a Sn-based negative electrode active material and a carbon-based negative electrode active material, a mixing ratio may be about 1:99 to about 90:10 by weight.

The negative electrode active material may be included in an amount from about 90 wt% to about 99.8 wt%, or from about 94 wt% to about 99 wt%, based on 100 wt% of the negative electrode active material layer.

The binder serves to well adhere the negative electrode active material particles to each other and also to adhere the negative electrode active material to the negative electrode current collector. The binder may be a non-aqueous binder, an aqueous binder, a dry binder, or a combination thereof.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber and may be, for example, polytetrafluoroethylene, polyvinylidene fluoride, a polyvinylidene fluoride-hexafluoropropylene copolymer, polyethylene oxide, or a combination thereof.

The conductive material is included to provide electrode conductivity, and any electrically conductive material may be used as a conductive material unless it causes an undesirable chemical change. Examples of the conductive material include a carbon-based material such as natural graphite, artificial graphite, carbon black, acetylene black, Ketjen black, a carbon fiber, a carbon nanofiber, or a carbon nanotube; a metal-based material of a metal powder or a metal fiber including copper, nickel, aluminum, or silver; a conductive polymer such as a polyphenylene derivative; or a mixture thereof.

An amount of the binder may be from about 0.1 wt% to about 5 wt% based on 100 wt% of the negative electrode active material layer, and an amount of the conductive material may be from about 0.1 wt% to about 5 wt% based on 100 wt% of the negative electrode active material layer.

### Electrolyte

An electrolyte for a rechargeable lithium battery is an electrolyte solution and includes a non-aqueous organic solvent and a lithium salt.

The non-aqueous organic solvent serves as a medium for transmitting ions taking part in the electrochemical reaction of a battery. The non-aqueous organic solvent may be a carbonate-based solvent, an ester-based solvent, an ether-based solvent, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), or butylene carbonate (BC). The ester-based solvent may include methyl acetate, ethyl acetate, n-propyl acetate, t-butyl acetate, methyl propionate, ethyl propionate, decanolide, mevalonolactone, valerolactone, or caprolactone. The ether-based solvent may include dibutyl ether, tetraglyme, diglyme, dimethoxyethane, 2-methyltetrahydrofuran, 2,5-dimethyltetrahydrofuran, or tetrahydrofuran. The ketone-based solvent may include cyclohexanone. The alcohol-based solvent may include ethanol, or isopropyl alcohol, and the aprotic solvent may include nitriles such as R-CN (wherein R is a C2 to C20 linear, branched, or cyclic hydrocarbon group, and may include a double bond, an aromatic ring, or an ether group); amides such as dimethylformamide; dioxolanes such as 1,3-dioxolane or 1,4-dioxolane; or sulfolanes.

The non-aqueous organic solvent may be used alone or in combination of two or more, and when two or more types are used in combination, the mixing ratio may be appropriately adjusted depending on intended battery performances, which is widely understood by those working in the relevant field.

When using a carbonate-based solvent, a cyclic carbonate and a chain carbonate may be mixed and used, and the cyclic carbonate and the chain carbonate may be mixed in a volume ratio from about 1:1 to about 1:9.

The non-aqueous organic solvent may further include an aromatic hydrocarbon-based organic solvent. A carbonate-based solvent and an aromatic hydrocarbon-based organic solvent may be mixed and used in a volume ratio from about 1:1 to about 30:1.

The electrolyte solution may further include vinylethylene carbonate, vinylene carbonate, or an ethylene carbonate-based compound to improve battery cycle-life of the rechargeable lithium battery.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the non-aqueous organic solvent supplies lithium ions in a battery, enables a basic operation of a rechargeable lithium battery, and improves transportation of the lithium ions between positive and negative electrodes. Examples of the lithium salt may include at least one of LiPF₆, LiBF₄, LiSbF₆, LiAsF₆, LiClO₄, LiAlO₂, LiAlCl₄, LiPO₂F₂, LiCl, LiI, LiN(SO₂C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1SO2}) (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. When the concentration of lithium salt is within the above range, the electrolyte solution has appropriate ionic conductivity and viscosity. Thus, excellent performance can be achieved, and lithium ions can move effectively.

### Separator

Depending on the type of rechargeable lithium battery, a separator may exist between the positive and negative electrodes. The separator may include polyethylene, polypropylene, polyvinylidene fluoride, or a multilayer film of two or more layers and may be a mixed multilayer film such as a polyethylene/polypropylene two-layer separator, a polyethylene/polypropylene/polyethylene three-layer separator, or a polypropylene/polyethylene/polypropylene three-layer separator.

The separator may include a porous substrate and a coating layer including an organic material, an inorganic material, or a combination thereof on one or both surfaces of the porous substrate.

The porous substrate may be a polymer film formed of any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, polytetrafluoroethylene (e.g., TEFLON^{®}), or a copolymer or mixture of two or more thereof. The porous substrate may include glass fibers, or may comprise a composite membrane of polymer and glass fibers.

The porous substrate may have a thickness from about 1 µm to about 40 µm, for example, from about 1 µm to about 30 µm, from about 1 µm to about 20 µm, from about 5 µm to about 15 µm, or from about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles of Al₂O₃, SiO₂, TiO₂, SnO₂, CeO₂, MgO, NiO, CaO, Ga₂O₃, ZnO, ZrO₂, Y₂O₃, SrTiO₃, BaTiO₃, Mg(OH)₂, boehmite, and a combination thereof, but the inorganic material is not limited thereto. An average particle diameter D₅₀ of the inorganic particles may be from about 1 nm to about 2000 nm, for example, from about 100 nm to about 1000 nm, or from about 100 nm to about 700 nm.

The organic material and the inorganic material may be mixed in one coating layer, or a coating layer including an organic material and a coating layer including an inorganic material may be stacked.

A thickness of the coating layer may be from about 0.5 µm to about 20 µm, for example, from about 1 µm to about 10 µm or from about 1 µm to about 5 µm.

Hereinafter, examples and comparative examples of the present invention are described. However, the examples described below are only some embodiments of the present invention, and the present invention is not limited to the examples described below.

### Example 1

### (1) Preparation of Composite Positive Electrode Active Material

FePO₄ as an iron phosphate-based precursor and Li₂CO₃ as a lithium raw material were mixed in a molar ratio of 2:1 to prepare a raw material mixture. In addition, a carbon raw material was prepared by mixing glucose and polyethylene glycol in a weight ratio of 5:5. Further, 90 wt% of the raw material mixture and 10 wt% of the carbon raw material were mixed to form a mixture, and distilled water as a second solvent was added to the mixture to wet-mill the mixture into a second slurry. The wet milling was carried out using a ball milling apparatus. Specifically, a mixture of about 90 wt% of the raw material mixture and about 10 wt% of the carbon source material was introduced into a milling container having a capacity of about 5 L, together with about 3 kg of zirconia balls and about 2 kg of water, and the wet milling was performed by rotating the container at a rotational speed of about 100 rpm for about 3 hours. During the wet milling, TiO₂ as a titanium-based raw material was added, and the amount was adjusted such that Ti accounted for 0.4 mol% based on a total metal, excluding lithium, of a finally obtained lithium iron phosphate-based compound.

The wet-milled slurry was fed into a spray dryer (Büchi Mini Spray Dryer B-290) at 0.5 kg/min and then spray-dried at 200°C to obtain a second dried product. This a second dried product was fired at 750°C for 8 hours to obtain a second fired product. The second fired product was pulverized at 6000 rpm by using an air jet-mill to obtain a first positive electrode active material. Through the pulverization process, the second fired product (which included the lithium iron phosphate-based compound in the form of secondary particles (or assemblies) in which a plurality of the primary particles was agglomerated) was pulverized into the first positive electrode active material in which the plurality of primary particles was not agglomerated but separated. The first positive electrode active material had a composition of LiFe_{0.996}Ti_{0.004}PO₄ and was in the form of primary particles.

### (Preparation of a second electrode active material)

Ni_{0.6}Co_{0.1}Mn_{0.3}(OH)₂ and LiOH were mixed at a molar ratio of 1:1 and subjected to a first heat treatment at 850 °C for 15 hours in an oxygen atmosphere to prepare a lithium nickel-based composite oxide having a composition of LiNi_{0.6}Co_{0.1}Mn_{0.3}O₂ in the form of single particles having an average particle diameter of 3 µm.

Thereafter, the lithium nickel-based composite oxide in the form of single particles and tungsten oxide (WO₃) were introduced into a Henschel mixer and mixed for 30 minutes to prepare a mixture. At this time, the tungsten content derived from the tungsten oxide was adjusted to 0.25 mol% based on 100 mol% of all metals excluding lithium in the final second positive electrode active material.

The mixture was then subjected to a second heat treatment to obtain a second positive electrode active material. The heat treatment was performed by including a temperature-ramping step of increasing the temperature from 25 °C to 400 °C at a rate of 6.25 °C/min, and a holding step of maintaining the temperature at 400 °C for 5 hours. The second positive electrode active material has a composition of LiNi_{0.5985}Co_{0.09975}Mn_{0.29925}W_{0.0025}O₂ and is in the form of single particles having an average particle diameter of about 3 µm. The single particles of the second positive electrode active material correspond to primary particles constituting secondary particles in a composite positive electrode active material described below, and are used herein with the same meaning as primary particles.

### (Preparation of Composite Positive Electrode Active Material)

The first positive electrode active material and the second positive electrode active material were mixed at a weight ratio of 7:3 using a mixer (L5M-A) at 15 rpm for 30 minutes, and H₃BO₃ as a boron raw material was added to the mixture so that boron was 0.5 parts by mole based on 100 parts by mole of elements, excluding lithium and oxygen, in the total of the first positive electrode active material and the second positive electrode active material, and then water was added as a solvent to perform wet milling, thereby preparing a first slurry. The first slurry was added to a spray dryer (Büchi Mini Spray Dryer B-290) at 0.5 kg/min and then spray-dried at 200°C to obtain a first dried product. The wet milling was performed using a ball milling apparatus. Specifically, about 3 kg of zirconia balls, about 2 kg of water, and about 2 kg of a mixture of the first positive electrode active material and the second positive electrode active material mixed at a weight ratio of 9:1 were introduced into a milling container having a capacity of about 5 L, and the container was rotated at a rotational speed of about 50 rpm for about 1 hour. The first first dried product was a composite positive electrode active material in the form of secondary particles in which primary particles of the first positive electrode active material and primary particles of the second positive electrode active material were agglomerated, and a coating portion including a boron-containing compound formed on the surface of the secondary particles. The amount of boron in the coating portion was approximately 0.5 mol% based on 100 mol% of the total elements, excluding lithium and oxygen, in the final composite positive electrode active material.

### (2) Manufacturing of Positive Electrode

The composite positive electrode active material was mixed with polyvinylidene fluoride as a binder and carbon nanotube as a conductive material in a weight ratio of 96:2:2 (positive electrode active material:binder:conductive material) to prepare a positive electrode active material composition. This composition was dispersed in an N-methyl pyrrolidone solvent to prepare a positive electrode active material slurry, which was coated on a 15-µm-thick Al foil and then dried and compressed to manufacture a positive electrode.

### (3) Manufacturing of Rechargeable Lithium Battery Cell

97.5 wt% of graphite as a negative electrode active material, and 1.5 wt% of carboxymethyl cellulose and 1 wt% of styrene butadiene rubber as a binder were dispersed in distilled water to prepare a negative electrode active material slurry. This slurry was coated on a 10 µm-thick Cu foil and then dried and compressed to manufacture a negative electrode.

Between the positive electrode and the negative electrode, a 10 µm-thick polyethylene separator was disposed to manufacture an electrode assembly, which was inserted into a case, and an electrolyte was injected into the case to manufacture a rechargeable lithium battery cell (a pouch-type cell of 100 mAh level). The electrolyte was prepared by mixing EC (ethylenecarbonate):EMC (ethylmethylcarbonate):DMC (dimethylcarbonate) in a volume ratio of 2:4:4 and dissolving 1.15 M LiPF₆ in the mixed solvent.

### Example 2

A composite positive electrode active material, a positive electrode, and a rechargeable lithium battery cell were manufactured in substantially the same manner as in Example 1, except that, in the process of the section '(1) Preparation of Composite Positive Electrode Active Material' of Example 1, 1 part by mole of H₃BO₃, a boron raw material, was added instead of 0.5 parts by mole when preparing the first slurry.

### Example 3

A composite positive electrode active material, a positive electrode, and a rechargeable lithium battery cell were manufactured in substantially the same manner as in Example 1, except that, in the process of the section '(1) Preparation of Composite Positive Electrode Active Material' of Example 1, 1.5 parts by mole of H₃BO₃, a boron raw material, was added instead of 0.5 parts by mole when preparing the first slurry.

### Example 4

A composite positive electrode active material, a positive electrode, and a rechargeable lithium battery cell were manufactured in substantially the same manner as in Example 1, except that, in the process of the section '(1) Preparation of Composite Positive Electrode Active Material' of Example 1, the first positive electrode active material and the second positive electrode active material were mixed in a weight ratio of 6:4 (first positive electrode active material:second positive electrode active material), instead of being mixed in a weight ratio of 7:3, when preparing the first slurry.

### Example 5

A composite positive electrode active material, a positive electrode, and a rechargeable lithium battery cell were manufactured in substantially the same manner as in Example 1, except that, in the process of the section '(1) Preparation of Composite Positive Electrode Active Material' of Example 1, the first positive electrode active material and the second positive electrode active material were mixed in a weight ratio of 8:2 (first positive electrode active material:second positive electrode active material), instead of being mixed in a weight ratio of 7:3, when preparing the first slurry.

### Comparative Example 1

A positive electrode and a rechargeable lithium battery cell were manufactured in substantially the same manner as in Example 1, except that, in the process of the section '(1) Preparation of Composite Positive Electrode Active Material' of Example 1, the first positive electrode active material, the second positive electrode active material, and the boron raw material were simply mixed using a mixer (L5M-A) at 15 rpm for 30 minutes and fired at 120°C for 6 hours to prepare a composite positive electrode active material, which was then used as the positive electrode active material in the section '(2) Manufacturing of Positive Electrode,' instead of preparing the first slurry and adding the first slurry into a spray dryer and spray drying the first slurry.

### Comparative Example 2

A positive electrode and a rechargeable lithium battery cell were manufactured in substantially the same manner as in Example 1, except that, in the process of the section '(2) Manufacturing of Positive Electrode' of Example 1, the first positive electrode active material prepared in the process of the section '(1) Preparation of Composite Positive Electrode Active Material' and the prepared second positive electrode active material were simply mixed using a mixer (L5M-A) at 15 rpm for 30 minutes in a weight ratio of 7:3 as the positive electrode active material.

The weight ratios of the first positive electrode active material and the second positive electrode active material in Examples 1 to 5 and Comparative Examples 1 and 2, the added amounts of the boron raw material, and the forms of the composite positive electrode active material are summarized and shown in Table 1.

**Table 1:**

| | Weight ratio of first positive electrode active material and second positive electrode active material | Added amount of a boron raw material (based on 100 parts by mole of elements, excluding lithium and oxygen, in the first positive electrode active material and second positive electrode active material) | Form of composite positive electrode active material |
|---|---|---|---|
| Example 1 | 7:3 | 0.5 parts by mole | secondary particles + coating portion |
| Example 2 | 7:3 | 1 part by mole | secondary particle + coating portion |
| Example 3 | 7:3 | 1.5 parts by mole | secondary particle + coating portion |
| Example 4 | 6:4 | 0.5 parts by mole | secondary particle + coating portion |
| Example 5 | 8:2 | 0.5 parts by mole | secondary particle + coating portion |
| Comparative Example 1 | 7:3 | 0.5 parts by mole | dispersion form + coating portion |
| Comparative Example 2 | 7:3 | - | dispersion form |

### Evaluation Example 1: Evaluation of Composite Positive Electrode Active Material

### (1) Porosity Evaluation

The composite positive electrode active materials of Examples 1 to 5 were measured with respect to porosity, and the results are shown in Table 2. The porosity was obtained by taking a scanning electron microscope image on the cross-section of secondary particles of each composite positive electrode active material to measure a ratio of an area of pores in the cross-section of the secondary particles to a cross-sectional area of the secondary particles, and the results are shown in Table 2.

### (2) Particle Analysis

Cross-sections of the composite positive electrode active materials manufactured in Examples 1 to 5 were photographed using a scanning electron microscope. Referring to the scanning electron microscope images of the composite positive electrode active materials of Examples 1 to 5, the average particle diameter of the secondary particles, the average particle diameter, the arithmetic mean size, and the standard deviation thereof of the primary particles of the first positive electrode active material, and the average particle diameter of the primary particles of the second positive electrode active material were measured and are shown in Table 2.

Specifically, the average particle diameter of the secondary particles was obtained by randomly selecting 20 secondary particles in the scanning electron microscope image of each of the composite positive electrode active materials, measuring the size of each secondary particle, and calculating an arithmetic mean of the size of each secondary particle, wherein the size of each secondary particle is defined as a diameter in the case of a spherical particle, and as a square root of a product of a major axis length and a minor axis length in the case of a non-spherical particle. The average particle diameter of the primary particles of the first positive electrode active material and the average particle diameter of the primary particles of the second positive electrode active material were also obtained by randomly selecting 20 primary particles of the first positive electrode active material and 20 primary particles of the second positive electrode active material, respectively, from the scanning electron microscope image of each composite positive electrode active material, measuring the size of each primary particle, and calculating an arithmetic mean of the size of each primary particle, wherein the size of each primary particle is defined as a diameter in the case of a spherical particle, and as a square root of a product of a major axis length and a minor axis length in the case of a non-spherical particle. In this case, within the composite positive electrode active material, as described above, particles having a particle size of less than about 2 µm are regarded as primary particles of the first positive electrode active material and their particle sizes are measured to obtain an arithmetic mean, whereas particles having a particle size of greater than or equal to about 2 µm are regarded as primary particles of the second positive electrode active material and their particle sizes are measured to obtain an arithmetic mean.

The arithmetic mean size and its standard deviation of the primary particles of the first positive electrode active material were obtained by measuring sizes of 20 primary particles of the first positive electrode active material from the scanning electron microscope image of the cross-section of the composite positive electrode active material-wherein the particle size is defined as a diameter in the case of spherical particles and as a square root of a product of a major axis length and a minor axis length in the case of non-spherical particles-and calculating the arithmetic mean and the standard deviation of the arithmetic mean.

A number of the primary particles of the second positive electrode active material in composite positive electrode active material particle was determined by counting the number of particles having a particle size of greater than or equal to about 2 µm in the scanning electron microscope image of the cross-section of the composite positive electrode active material, wherein the particle size is defined as a diameter in the case of spherical particles and as a square root of a product of a major axis length and a minor axis length in the case of non-spherical particles. Here, the number of primary particles is an average value of the numbers of primary particles of the second positive electrode active material in a plurality of composite positive electrode active material particles.

Meanwhile, in Comparative Examples 1 and 2, unlike Examples 1 to 5, the first positive electrode active material and the second positive electrode active material were not prepared into the form of an assembly by spray drying, but, rather, the first positive electrode active material, the second positive electrode active material and a boron-containing compound (Comparative Example 1) or the first positive electrode active material and the second positive electrode active material (Comparative Example 2) were simply mixed. Therefore, the first positive electrode active material and the second positive electrode active material existed in a mutually dispersed state, and therefore, evaluation of Table 2 was not performed.

**Table 2:**

| | Porosity (%) | Average particle diameter of secondary particles (µm) | Average particle diameter of primary particles of first positive electrode active material (µm) | Arithmetic mean size of primary particles of first positive electrode active material (nm) | Standard deviation of arithmeti c mean size of primary particles of first positive electrode active material (nm) | Average particle diameter of primary particles of second positive electrode active material (µm) | The number of primary particles of second positive electrode active materials in particle of the composite positive electrode active material particle |
|---|---|---|---|---|---|---|---|
| Ex. 1 | 15.2 | 15 | 0.5 | 200 | 20.7 | 3 | 8 |
| Ex. 2 | 15.7 | 15 | 0.5 | 200 | 19.6 | 3 | 8 |
| Ex. 3 | 16.1 | 15 | 0.5 | 200 | 18.7 | 3 | 8 |
| Ex. 4 | 11.2 | 15 | 0.5 | 200 | 19.5 | 3 | 10 |
| Ex. 5 | 18.9 | 15 | 0.5 | 200 | 21.5 | 3 | 5 |

Referring to Table 2, it was confirmed, for the composite positive electrode active materials of Examples 1 to 5, that the first positive electrode active material was prepared so that it had relatively small and uniform primary particles, and the primary particles were formed into one assembly form with the primary particles of the second positive electrode active material.

### (3) STEM-EDS Analysis Results Near the Surface

In order to confirm an elemental distribution near a surface of the composite positive electrode active material according to Example 1, scanning transmission electron microscopy-energy dispersive spectroscopy (STEM-EDS) analysis was performed. Specifically, the composite positive electrode active material was processed into a cross-sectional specimen using a focused ion beam (FIB; Helios 5, Thermo Fisher Scientific), and a cross-sectional image of the particle was observed using a scanning transmission electron microscope (STEM; JEM-ARM200F, JEOL) under an acceleration voltage condition of 200 kV. Thereafter, EDS line scan analysis was performed from a surface of the particle toward an inner direction thereof to measure changes in elemental peak intensity according to depth.

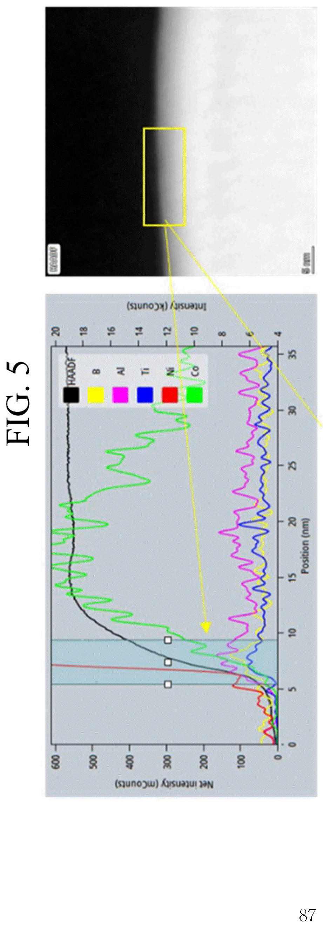

FIG. 5 shows results of the STEM-EDS line scan analysis from the surface toward the inner direction of the composite positive electrode active material according to Example 1. Referring to FIG. 5, it was confirmed that a peak intensity of boron (B) increased near the surface of the particle and then decreased as moving toward the inner direction. Through this, it was confirmed that the boron component mainly exists near the surface of the composite positive electrode active material. In addition, it was confirmed that the boron component was distributed over a range of about 5 nm to about 10 nm from the particle surface, thereby forming a coating layer having a thickness range of about 5 nm.

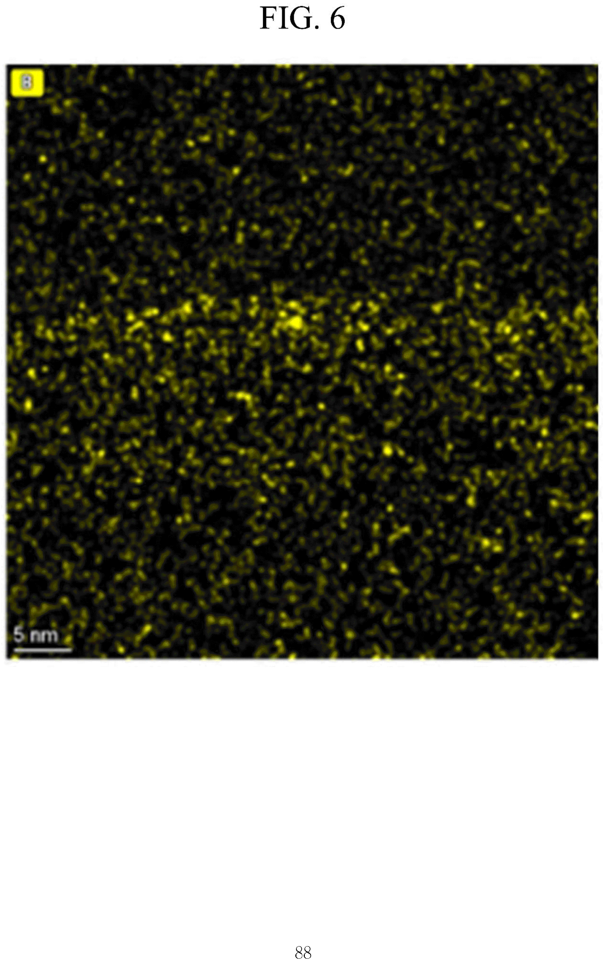

FIG. 6 is an image obtained by enlarging a region adjacent to the particle surface indicated by a rectangle in the STEM image of the cross-section of the composite positive electrode active material particle shown on the right side of FIG. 5 and mapping a boron element therein. Referring to FIG. 6, it was confirmed that the boron element was intensively distributed near the surface of the composite positive electrode active material particle and formed a coating layer in a relatively uniform form.

### Evaluation Example 2: Evaluation of Battery Performance

### (1) Evaluation of Initial Charge/discharge Capacity and Efficiency

The rechargeable lithium battery cells of Examples 1 to 5 and Comparative Examples 1 and 2 were charged to a battery voltage of 4.45 V at 0.2 C-rate and discharged to a cut-off voltage of 3.0 V at 0.2 C-rate at 25°C to measure initial charge/discharge capacity, which was used to calculate initial efficiency according to Equation 1. The results are shown in Table 3.

Equation 1 is as follows: [Equation 1] $Initial efficiency \left[%\right] = \left[\begin{matrix}discharge capacity at {1}^{st} cycle / charge capacity at \\ {1}^{st} cycle\end{matrix}\right] \times 100 .$

### (2) Low-temperature Capacity Evaluation

The rechargeable lithium battery cells of Examples 1 to 5 and Comparative Examples 1 and 2 were fully charged to a battery voltage of 4.45 V at 0.2 C-rate and then discharged to 3.0 V at 0.2 C-rate under an atmosphere set at -20°C to measure low-temperature discharge capacity. The results are shown in Table 3.

### (3) Cycle-life Characteristics Evaluation

The rechargeable lithium battery cells of Examples 1 to 5 and Comparative Examples 1 and 2 were 50 times repeatedly charged to a battery voltage of 4.45 V at 1 C-rate and then discharged to a cut-off voltage of 3.0 V at 1 C-rate after the initial charge and discharge to calculate a ratio of 50^{th} cycle discharge capacity to the initial discharge capacity according to Equation 2, below, and the results are shown in Table 3.

Equation 2 is as follows: [Equation 2] $\begin{matrix}Cycle - life \left[%\right] = \left[Discharge capacity at {50}^{th} cycle/Discharge capacity at {1}^{st} cycle\right] \times \\ 100 .\end{matrix}$

### (4) High-temperature Storage Characteristics Evaluation

The rechargeable lithium battery cells of Examples 1 to 5 and Comparative Examples 1 and 2 were charged to state of charge (SOC) of 98% at 0.2C-rate and were then allowed to stand at 45°C in a high-temperature chamber for 7 days to measure a capacity retention rate, and the results are shown in Table 3.

**Table 3:**

| | 0.2C initial charge capacity (mAh/g) | 0.2C initial discharge capacity (mAh/g) | 0.2C effici ency (%) | Low temperature (-20°C) discharge capacity (mAh/g) | 1C cycle-life (%, @50cy) | High-temperature 45°C capacity retention rate (%) |
|---|---|---|---|---|---|---|
| Ex. 1 | 178.9 | 169.2 | 94.6 | 96.4 | 99 | 88 |
| Ex. 2 | 179.5 | 170.9 | 95.2 | 97 | 99.1 | 87.9 |
| Ex. 3 | 179.4 | 170.4 | 95 | 96.8 | 98.9 | 88.1 |
| Ex. 4 | 188.2 | 175.6 | 95.1 | 97.3 | 98.5 | 85.2 |
| Ex. 5 | 177.1 | 168.5 | 95.1 | 96.5 | 98.1 | 85.1 |
| Comp. Ex. 1 | 175.2 | 164.3 | 93.7 | 83 | 96.5 | 68.2 |
| Comp. Ex. 2 | 177.8 | 165.6 | 93.7 | 90.9 | 97.5 | 70.1 |

Referring to Table 3, the positive electrode active materials prepared in Examples 1 to 5 in which secondary particles in a form of an assembly including primary particles of the first positive electrode active material and primary particles of the second positive electrode active material were formed and the boron coating portion was formed on the surface of the secondary particles of the assembly exhibited improved overall battery performance, including initial discharge capacity, initial charge/discharge efficiency, low-temperature discharge capacity, 1C cycle-life, and high-temperature capacity retention rate for the rechargeable lithium battery, compared to the positive electrode active materials prepared in Comparative Examples 1 and 2 in which the first positive electrode active material and the second positive electrode active material were simply mixed and dispersed.

In the case of the rechargeable lithium battery cells including the positive electrode active materials prepared in Comparative Examples 1 and 2, the first positive electrode active material and the second positive electrode active material were simply mixed, and an isolation phenomenon occurred between the particles of the first positive electrode active material and the second positive electrode active material due to insufficient electrochemical reactions between the different particles, which may result in a decrease in overall battery performance due to a problem with physical connection between the different particles. Particularly, the high-temperature storage characteristics were significantly deteriorated.

In Comparative Example 1 (which included a boron coating portion similar to Examples 1 to 5), the battery performance was inferior to that of Comparative Example 2, as well as Examples 1 to 5. This is because, for the positive electrode active material prepared in Comparative Example 1, a boron coating portion was formed on the surface of the simply mixed positive electrode active material, and the boron coating portion was applied unevenly, which obstructed a movement path of lithium ions or reduced conductivity within the electrode, resulting in inferior battery performance compared to Comparative Example 2 as well as Examples 1 to 5.

While this invention has been described in connection with what is presently considered to be practical embodiments, the present disclosure is not limited to the above-described embodiments.

### <Description of Representative Reference Numerals>

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealer | 70: | electrode tab |
| 71: | positive electrode tab | 72: | negative electrode tab |

## Claims

1. A composite positive electrode active material comprising:
a core particle in a form of secondary particles; and
a coating portion being disposed on a surface of the core particle and comprising boron,
wherein the core particle comprises:
a first positive electrode active material comprising a lithium iron phosphate-based compound and being in a form of a plurality of primary particles; and
a second positive electrode active material comprising a lithium nickel-based composite oxide and being in a form of a plurality of primary particles.

2. The composite positive electrode active material as claimed in claim 1, wherein the lithium iron phosphate-based compound comprises a compound represented by Chemical Formula 1, a compound represented by Chemical Formula 2, or a combination thereof:
[Chemical Formula 1] Liₐ₁Fe₍₁₋ₓ₁₎M¹ₓ₁PO₄,
where 0.9≤a1≤1.5, 0≤x1≤0.4, and M¹ is Al, Ca, Ce, Cr, Cu, La, Mg, Mn, Mo, Nb, Ni, Sn, Sr, Ti, V, W, Y, Zn, Zr, or a combination thereof; and
[Chemical Formula 2] Liₐ₂Mnₓ₂Fe_{(1-x2-y2)}M²_{y2}PO₄,
where 0.9≤a2≤1.5, 0.1≤x2≤0.9, 0≤y2<0.9, x2+y2<1, and M² is Al, Ca, Ce, Cr, Cu, La, Mg, Mo, Nb, Ni, Sn, Sr, Ti, V, W, Y, Zn, Zr, or a combination thereof.

3. The composite positive electrode active material as claimed in claim 1 or claim 2, wherein the lithium iron phosphate-based compound comprises Al, Mg, Ti, V, or a combination thereof in an amount from 0.1 mol% to 0.5 mol% based on a total metal of the lithium iron phosphate-based compound, excluding lithium.

4. The composite positive electrode active material as claimed in any one of claims 1 to 3, wherein the first positive electrode active material further includes a carbon coating portion on surfaces of the primary particles.

5. The composite positive electrode active material as claimed in any one of claims 1 to 4, wherein the lithium nickel-based composite oxide is represented by:
Liₐ₃Niₓ₃M³_{y3}M⁴_{z3}O_{2-b3}X_{b3},
where 0.9≤a3≤1.2, 0.3≤x3≤1, 0≤y3≤0.7, 0≤z3≤0.7, 0.9≤x3+y3+z3≤1.1, and 0≤b3≤0.1, M³ and M⁴ are each independently Al, B, Ba, Ca, Ce, Co, Cr, Cu, Fe, Mg, Mn, Mo, Nb, Si, Sn, Sr, Ti, V, W, Y, Zn, Zr, or a combination thereof, M³ and M⁴ are different elements, and X is F, P, S, or a combination thereof.

6. The composite positive electrode active material as claimed in any one of claims 1 to 5, wherein an amount of nickel in the lithium nickel-based composite oxide is from 50 mol% to 100 mol%, based on 100 mol% of a total metal in the lithium nickel-based composite oxide, excluding lithium.

7. The composite positive electrode active material as claimed in any one of claims 1 to 6, wherein an average particle diameter of the primary particles of the first positive electrode active material is greater than or equal to 0.1 µm and less than 2 µm, and
wherein an average particle diameter of the primary particles of the second positive electrode active material is from 2 µm to 8 µm.

8. The composite positive electrode active material as claimed in any one of claims 1 to 7, wherein an average particle diameter of the secondary particles is from 3 µm to 20 µm.

9. The composite positive electrode active material as claimed in any one of claims 1 to 8, wherein
(a) the core particle comprises the first positive electrode active material in an amount from 50 wt% to 99 wt% based on 100 wt% of the core particle, and
wherein the core particle comprises the second positive electrode active material in an amount from 1 wt% to 50 wt% based on 100 wt% of the core particle, and/or
(b) a number of the primary particles of the second positive electrode active material in core particle is 10 or less,
and/or
(c) the coating portion comprises a boron-containing compound, and
wherein the boron-containing compound comprises boron oxide, lithium borate, or a combination thereof.

10. The composite positive electrode active material as claimed in any one of claims 1 to 9, wherein the composite positive electrode active material comprises boron in an amount of from 0.01 mol% to 3 mol%, based on 100 mol% of elements in the composite positive electrode active material excluding lithium and oxygen.

11. The composite positive electrode active material as claimed in any one of claims 1 to 10, further comprising a grain boundary coating portion disposed on the surface of the primary particles and disposed inside the secondary particles, the grain boundary coating portion comprising boron,
wherein, preferably, a weight ratio of boron in the coating portion to boron in the grain boundary coating portion ranges from 70:30 to 98:2.

12. A method of preparing the composite positive electrode active material, the method comprising:
preparing a first positive electrode active material comprising a lithium iron phosphate-based compound and being in a form of primary particles;
mixing and wet milling the first positive electrode active material, a second positive electrode active material comprising a lithium nickel-based composite oxide and in a form of primary particles, and a boron raw material to prepare a first slurry; and
adding the first slurry to a spray dryer and spray drying the first slurry to prepare a first dried product.

13. The method as claimed in claim 12, wherein the preparing of the first positive electrode active material comprises:
wet milling an iron phosphate-based precursor, a lithium raw material, and a carbon raw material mixed in a second solvent to prepare a second slurry;
adding the second slurry to a spray dryer and spray-drying the second slurry to prepare a second dried product;
firing the second dried product to prepare a second fired product; and
pulverizing the second fired product.

14. The method as claimed in claim 12 or claim 13, wherein
(a) an amount of boron in the boron raw material is 0.01 parts by mole to 3 parts by mole, based on 100 parts by mole of elements in a total of the first positive electrode active material and the second positive electrode active material, excluding lithium and oxygen, and/or
(b) the spray drying of the first slurry and the spray drying of the second slurry is each independently performed at temperatures ranging from 150°C to 400°C,
and/or
(c) the method further comprises, after preparing the first dried product, firing the first dried product to prepare a first fired product,
wherein the firing is performed in vacuum or in an inert gas and at a temperature ranging from 300°C to 1000°C.

15. A rechargeable lithium battery comprising:
a positive electrode comprising:
a positive electrode current collector; and
a positive electrode active material layer disposed on the positive electrode current collector and comprising the composite positive electrode active material as claimed in any one of claims 1 to 11;
a negative electrode; and
an electrolyte.
